# EUROPEAN PATENT SPECIFICATION

(11) **EP 4 482 183 B1**
(45) Date of publication and mention of the grant of the patent: **13.05.2026**
(21) Application number: 24183174.2
(22) Date of filing: 19.06.2024
(51) Int. Cl.: H04W 4/48

(54) **APPARATUS FOR VEHICLE COMMUNICATION IN WIRELESS COMMUNICATION SYSTEM AND OPERATING METHOD THEREOF**
VORRICHTUNG ZUR FAHRZEUGKOMMUNIKATION IN EINEM DRAHTLOSKOMMUNIKATIONSSYSTEM UND BETRIEBSVERFAHREN DAFÜR
APPAREIL DE COMMUNICATION DE VÉHICULE DANS UN SYSTÈME DE COMMUNICATION SANS FIL ET SON PROCÉDÉ DE FONCTIONNEMENT

(30) Priority: 23.06.2023 KR 20230081334; 30.10.2023 KR 20230147062
(43) Date of publication of application: 25.12.2024
(73) Proprietor: Samsung Electronics Co., Ltd., Suwon-si, Gyeonggi-do 16677 (KR)
(72) Inventor: CHOI, Yongin, 16677 Suwon-si (KR); KIM, Mingoo, 16677 Suwon-si (KR); KIM, Jinho, 16677 Suwon-si (KR); DO, Joohyun, 16677 Suwon-si (KR); LEE, Jungwon, 16677 Suwon-si (KR); CHONG, Dahae, 16677 Suwon-si (KR); JE, Huiwon, 16677 Suwon-si (KR)
(74) Representative: Marks & Clerk LLP

(56) References cited:
- DE-A1- 102020 213 143
- US-A1- 2019 279 488
- US-A1- 2021 206 289
- US-A1- 2023 300 580

## Description

### BACKGROUND

The disclosure relates to an apparatus for vehicle communication in a wireless communication system and an operating method of the wireless communication system.

Recently, along with the development of vehicle technologies, the role of in-vehicle infotainment (IVI) has increased. IVI is an electronic device mounted in a vehicle to provide various pieces of information and services to a user in the vehicle. As terminal devices, such as smartphones, and various vehicle Internet of Things (IoT) devices, are commercialized, a user in a moving vehicle may receive various pieces of information and services through a terminal device and/or an IoT device.

For example, the user may use application information provided by a terminal device through IVI or use an application configured to provide a vehicle-related service in the terminal device through the IVI.

Recently, IVI techniques of providing complex services in which vehicle-related services and mobile communication-related services are combined with each other, based on a link between a vehicle and a terminal device (or an IoT device), have been developed. Accordingly, to smoothly provide such complex services, an efficient private network become necessary because the efficient private network may minimize the control overhead between an electronic device for vehicle communication in a vehicle and a terminal (or an IoT device).

US 2023/300580 A1 (SINGH AJOY K ET AL, 21 September 2023) discloses an invention in which a connected car and an onboard user equipment (UE) may establish independent cellular connections and may also establish a connection between each other.

US 2019/279488 A1 (SASAKI AKIRA, 12 September 2019) discloses a forgetting-to-carry prevention assistance method that assists, in a terminal device, a user in preventing forgetting to carry a personal item.

US 2021/206289 A1 (OTAKA MASARU, 8 July 2021) discloses a communication device that includes a communicator that is mounted in a mobile body and functions as a wireless access point, a power supplier configured to supply electric power at least to a driver that causes the mobile body to travel, a detector configured to detect the electric energy of the power supplier, and a controller configured to control at least one of communication strength and communication quality of the communicator based on the electric energy detected by the detector.

### SUMMARY

Provided are an apparatus capable of minimizing a control overhead in wireless communication between an electronic device for vehicle communication and an in-vehicle terminal (or an Internet of Things (IoT) device) in an in-vehicle private network and an operating method of the apparatus.

The technical aspects of the disclosure are not limited to the technical aspects mentioned above, and the other technical aspects could be understood by those of ordinary skill in the art from the description below.

According to an aspect of the disclosure, an electronic device includes: a memory storing pre-connection information; a first modem; a second modem; and a processor operatively connected to the memory, the first modem, and the second modem, wherein the processor is configured to: establish a first wireless communication connection with a base station, using the first modem, and establish a second wireless communication connection with a terminal in a vehicle, using the second modem, based on at least one piece of the pre-connection information, and wherein the pre-connection information comprises at least one of access frequency band information, system information, radio resource control (RRC) initial configuration value information, and registered device identification information, skip at least one procedure among an initial access procedure, a random access procedure, a channel state-related measurement/reporting procedure, a carrier aggregation procedure, or a handover-related measurement/reporting procedure, and wherein the at least one procedure is performed between the electronic device and the terminal.

In some embodiments, the second modem comprises at least one of a hardware component and a software component, which are included in the first modem. For example, in some embodiments, the second modem may comprise the same hardware as the first modem, but operate according to different software. The different software may be an updated version of first software according to which the first modem is operating. Both modems may comprise a memory and a same processor, where the memory of the first modem stores the first software executed by the processor of the first modem, and the memory of the second modem stores the different software executed by the processor of the second modem. In some embodiments, the second modem may comprise different hardware to the first modem, e.g. a different number of antennas.

In some embodiments, the processor is further configured to: establish a third wireless communication connection with an external device, based on at least one piece of the pre-connection information, using the second modem, receive device information from the external device through the third wireless communication connection, and transmit the device information to an advanced driver assistance system or in-vehicle infotainment of the vehicle, wherein the external device comprises an Internet of Things device comprising a modem having at least one function selected from amongst functions of a further telematics control unit or user equipment modem. The at least one function may correspond to a reduced function, which is reduced according to the characteristics of the third wireless communication connection.

In some embodiments, the processor is further configured to: receive universal subscriber identity module data of the terminal, from the terminal, based on the second wireless communication connection, establish a fourth wireless communication connection with an external base station, using the universal subscriber identity module data of the terminal, disconnect the first wireless communication connection based on establishing the fourth wireless communication connection, and transmit, to a target component of the vehicle, a control signal for performing at least one function of the terminal in the target component, based on the fourth wireless communication connection. The external base station may be the same base station with which the first wireless communication connection is established.

According to another aspect of the disclosure, an operating method of an electronic device, includes: establishing a first wireless communication connection with a base station using a first modem; and establishing a second wireless communication connection with a terminal in a vehicle, based on at least one piece of pre-connection information, using a second modem, wherein the pre-connection information comprises, as information pre-stored in the electronic device, at least one of access frequency band information, system information, radio resource control (RRC) initial configuration value information, and registered device identification information, skipping at least one procedure of an initial access procedure, a random access procedure, a channel state-related measurement/reporting procedure, a carrier aggregation procedure, or a handover-related measurement/reporting procedure, wherein the at least one procedure is performed between the electronic device (110) and the terminal (200).

In some embodiments, the method further comprises: in response to an acknowledge message being received from the terminal through the second wireless communication connection, increasing a modulation and coding scheme level for data to be transmitted to the terminal; in response to a negative acknowledge message being received from the terminal through the second wireless communication connection, decreasing the level for the data to be transmitted to the terminal; performing a discontinuous reception operation, based on a data transmission amount, through the second wireless communication connection; and in a case that another terminal establishes a wireless communication connection with the electronic device, transmitting data to the terminal and the another terminal, based on a time division multiplexing scheme.

According to another aspect of the disclosure, a vehicle system includes: an antenna module; a memory storing pre-connection information; an Internet of Things (IoT) module; a telematics control unit (TCU) comprising: a first modem configured to support a first wireless communication connection with a base station, and a second modem configured to support a second wireless communication connection between the vehicle system and a terminal or a third wireless communication connection between the vehicle system and the IoT module; and a processor operatively connected to the antenna module, the memory, the IoT module, and the TCU, wherein the TCU is configured to: establish a wireless communication connection with at least one of the terminal and the IoT module based on the pre-connection information and control data transmission and reception between the TCU and the terminal or data transmission and reception between the TCU and the IoT module, based on the established wireless communication connection, and wherein the second modem comprises at least one of a hardware component and a software component, which are included in the first modem.

At least some of the above and other features of the invention are set out in the claims.

### BRIEF DESCRIPTION OF THE DRAWINGS

Embodiments of the disclosure will be more clearly understood from the following detailed description taken in conjunction with the accompanying drawings in which:
FIG. 1 illustrates an operating method between an electronic device and a terminal, according to one or more embodiments;
FIG. 2 illustrates an electronic device according to one or more embodiments;
FIG. 3 illustrates a wireless communication system according to one or more embodiments;
FIG. 4 illustrates an operation of an electronic device, according to one or more embodiments;
FIG. 5 illustrates an operation of an electronic device, according to one or more embodiments;
FIG. 6 illustrates an operation of an electronic device, according to one or more embodiments;
FIG. 7 illustrates an operating method of an electronic device, according to one or more embodiments;
FIG. 8 illustrates an operating method of an electronic device, according to one or more embodiments; and
FIG. 9 illustrates a vehicle communication system according to one or more embodiments.

### DETAILED DESCRIPTION OF THE EMBODIMENTS

Hereinafter, embodiments are described in detail with reference to the accompanying drawings.

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under circumstances.

The terms "transmit", "receive", and "communicate" as well as the derivatives thereof encompass both direct and indirect communication. The terms "include" and "comprise", and the derivatives thereof refer to inclusion without limitation. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" refers to any device, system, or part thereof that controls at least one operation. The functionality associated with any particular controller may be centralized or distributed, whether locally or remotely. The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. The expression "at least one of a, b, or c" may indicate only a, only b, only c, both a and b, both a and c, both b and c, all of a, b, and c, or variations thereof. Similarly, the term "set" means one or more. Accordingly, the set of items may be a single item or a collection of two or more items.

Moreover, multiple functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as Read Only Memory (ROM), Random Access Memory (RAM), a hard disk drive, a Compact Disc (CD), a Digital Video Disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

The disclosure uses some of terms and names defined in the 3rd generation partnership project (3GPP) long term evolution (LTE) standard or the new radio (NR) standard. However, the disclosure is not limited to the terms and the names and may also be applied to systems conforming to other standards.

According to one or more embodiments, wireless communication system may be an NR system, a 5th generation (5G) system, an LTE system, a code division multiple access (CDMA) system, a global system for mobile communications (GSM) system, a wireless local area network (WLAN) system, or another arbitrary wireless communication system. Hereinafter, it is premised that the wireless communication system is an NR system, an LTE system, or an NR and LTE-based communication supportable system, but embodiments of the disclosure are not limited thereto.

According to one or more embodiments, a terminal may be referred to as, for example, user equipment (UE), a mobile station (MS), a mobile terminal (MT), a user terminal, a subscriber station (SS), a wireless device, a handheld device, or the like.

According to one or more embodiments, a terminal may support 4th generation (4G) communication (e.g., LTE or LTE-advanced (LTE-A)) defined in the 3GPP standard, 5G communication (e.g., NR), and the like.

In an embodiment, for 4G communication and 5G communication, a terminal may support a CDMA-based communication protocol, a wideband CDMA (WCDMA)-based communication protocol, a time division multiple access (TDMA)-based communication protocol, a frequency division multiple access (FDMA)-based communication protocol, an orthogonal frequency division multiplexing (OFDM)-based communication protocol, a cyclic prefix (CP)-OFDM-based communication protocol, a discrete Fourier transform-spread-OFDM (DFT-s-OFDM)-based communication protocol, a non-orthogonal multiple access (NOMA)-based communication protocol, a generalized frequency division multiplexing (GFDM)-based communication protocol, and the like.

According to one or more embodiments, a vehicle may include a telematics control unit (TCU), in-vehicle infotainment (IVI), and an advanced driver assistance system (ADAS).

In an embodiment, wired/wireless communication may be performed based on any one of 5G communication (NR) (e.g., the FR-1 or FR-2 band of 5G communication), 4G communication (LTE or LTE-A), ultra-wide band (UWB), wireless fidelity (WiFi), Bluetooth, or universal serial bus (USB), by which high-speed data transmission between a terminal and an electronic device is possible.

According to one or more embodiments, a base station may be referred to as a fixed station configured to communicate with a terminal and/or another base station. For example, a base station may be referred to as a Node B, an evolved-Node B (eNB), a sector, a site, a base transceiver system (BTS), an access point (AP), a relay node, a remote radio head (RRH), a radio unit (RU), or the like. For example, in a wireless communication system, a base station includes at least one cell as the minimum unit of an area for providing a communication service in each base station. A base station may provide efficient multiple access communication to a plurality of terminals based on a particular frequency resource allocated to each cell. In particular, in a multiple-input and multiple-output (MIMO) system, a terminal and a base station may perform wireless communication based on a plurality of component carriers.

In the specification, a reduced private network is a network for data transmission and reception between a vehicle and a device (e.g., an in-vehicle terminal and/or a vehicle IoT device) in the vehicle and may indicate a network of which some procedures are skipped or some functions are reduced from among the procedures or functions for wireless communication between devices in the 3GPP LTE or NR communication standard based on the data transmission and reception characteristics between the vehicle and the device in the vehicle.

In the 3GPP specification, a reduced eNB (Red-eNB) modem is an eNB modem configured to perform the least (minimal) operations for data transmission and reception between a vehicle (or an electronic device of the vehicle) and a terminal (or an IoT device) in a reduced private network and may be an eNB modem of which some functions are reduced from among the functions of an existing eNB modem (e.g., a base station modem in a 3GPP LTE or NR wireless communication system. Herein, the least (minimal) operations for the data transmission and reception may include an operation (e.g., an operation of allocating a resource for the data transmission and reception) of establishing a wireless communication channel between the vehicle (or the electronic device of the vehicle) and the terminal (or the IoT device) in the reduced private network and an operation (e.g., a data transmission and reception operation using the allocated resource) of performing communication through the established wireless communication channel. For example, the Red-eNB modem may skip at least one procedure (or operation) among an initial access procedure, a random access procedure, a channel state-related measurement/reporting procedure, a carrier aggregation procedure, and/or a handover-related measurement/reporting procedure between the vehicle (or the electronic device of the vehicle) and the terminal (or the IoT device).

In the 3GPP specification, an IoT device is a device (e.g., a sensor, a camera, or the like) capable of wirelessly communicating with a vehicle (e.g., the electronic device of the vehicle) and may be mounted in an external or internal structure of the vehicle. For example, the IoT device refers to a complex system of components (e.g., sensors, cameras, Global Positioning System (GPS) trackers) that are connected to the cloud and provide real-time data, which enables more efficient transport management and other services, such as advanced driver assistance systems (ADAS), object recognition, real-time line visibility, metal inspection, quality control, vehicle inspection, self-driving system, vehicle security, fleet management, and software update.

In the specification, a reduced-capability (RED-CAP) modem is a modem of an IoT device and may indicate a modem in which specifications (e.g., the number of antennas, an access frequency band, and a signal modulation scheme) of some hardware components are limited according to the characteristics of a reduced private network from a UE modem of the LTE/NR standard.

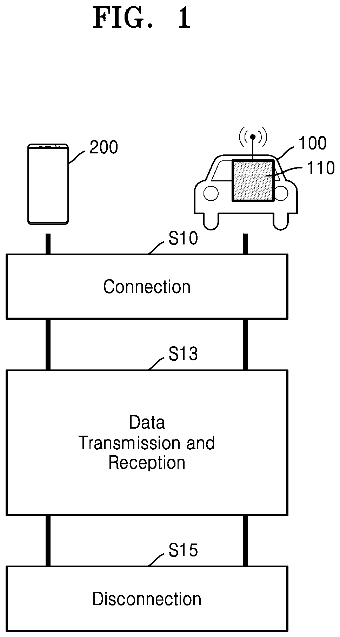

FIG. 1 illustrates an operating method between an electronic device 110 and a terminal 200, according to one or more embodiments. The electronic device 110 may be installed or mounted in a vehicle 100 as a part of the vehicle 100, and the terminal 200 may be user equipment (UE) or a mobile device such as smartphone carried by a driver or a passenger of the vehicle, not being limited thereto.

Recently, IVI may provide a complex service in which a vehicle-related service and a mobile communication-related service are fused, based on the terminal 200 or an IoT device in the vehicle 100. However, LTE or NR defined in the 3GPP communication standard is directed to data transmission and reception (e.g., wireless communication) between a base station and a terminal. LTE or NR defines an initial access procedure, a random access procedure, a handover procedure, a carrier aggregation procedure, and the like, but these procedures are procedures for controlling moving random terminals, and when the base station performs corresponding procedures, a significantly large control overhead may be caused.

Cellular vehicle-to-everything (C-V2X) of 3GPP is a vehicle communication technique used for a vehicle to exchange information with another vehicle, a traffic infrastructure, a pedestrian, a network, or the like through a cellular mobile communication network, such as an LTE or NR network. LTE or NR sidelink communication defined for C-V2X is an inter-device communication method using a resource pool based on source identifiers Source_IDs and destination identifiers Destination_IDs between moving devices (e.g., a vehicle and other vehicles). LTE or NR sidelink communication between moving devices may cause a significantly large control overhead in a data transmission and reception process, or a modem chip in a commercialized device may not support C-V2X.

Therefore, according to one or more embodiments, the electronic device 110 and an operating method of the electronic device 110 may be provided to minimize a control overhead in a data transmission and reception process between the electronic device 100 and an in-vehicle device (e.g., a terminal or an IoT device) by skipping or reducing some procedures/functions from among various procedures/functions defined in existing 3GPP communication standards (e.g., LTE and NR standards) according to the characteristics of a reduced private network in the vehicle 100.

Referring to FIG. 1, a wireless communication system according to one or more embodiments may include the vehicle 100 including the electronic device 110, the terminal 200 located in the vehicle 100, and a base station.

In FIG. 1, the vehicle 100 and the base station establish a wireless communication connection based on a cellular mobile communication network and the vehicle 100 and the terminal 200 establish a wireless communication connection based on a reduced private network. Herein, the reduced private network is a network for data transmission and reception between a vehicle and a device (e.g., an in-vehicle terminal and/or a vehicle IoT device) in the vehicle. The reduced private network may indicate a network of which some procedures are skipped or some functions are reduced from among the procedures or functions for wireless communication between devices in the 3GPP LTE or NR communication standard, based on the data transmission and reception characteristics between the vehicle and a device in the vehicle.

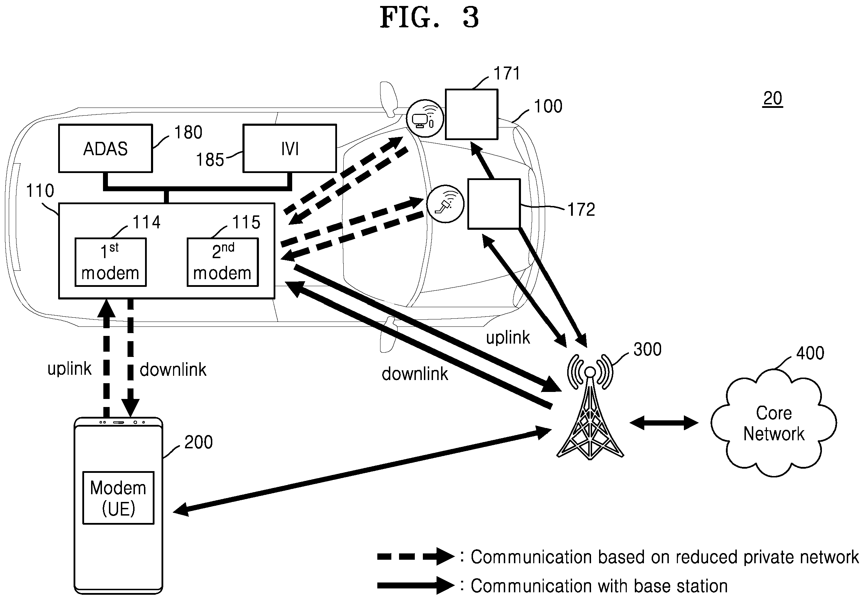

In an embodiment, the vehicle 100 (e.g., the electronic device 110 of the vehicle 100) and the terminal 200 may perform a connection for inter-device wireless communication based on the reduced private network in operation S10. For example, the vehicle 100 and the terminal 200 skips at least one procedure among an initial access procedure, a random access procedure, a channel state-related measurement/reporting procedure, a carrier aggregation procedure, and a handover-related measurement/reporting procedure in the 3GPP LTE or NR communication standard. The at least one procedure establishes a wireless communication connection between the electronic device 110 and the terminal 200 (or an IoT device) based on pre-stored pre-connection information. A particular description thereof is made below with reference to FIG. 3.

In an embodiment, the vehicle 100 (e.g., the electronic device 110 of the vehicle 100) and the terminal 200 may exchange data therebetween through the reduced private network in operation S13. For example, the vehicle 100 (e.g., the electronic device 110 of the vehicle 100) may perform a target work based on data (e.g., uplink data) received from the terminal 200.

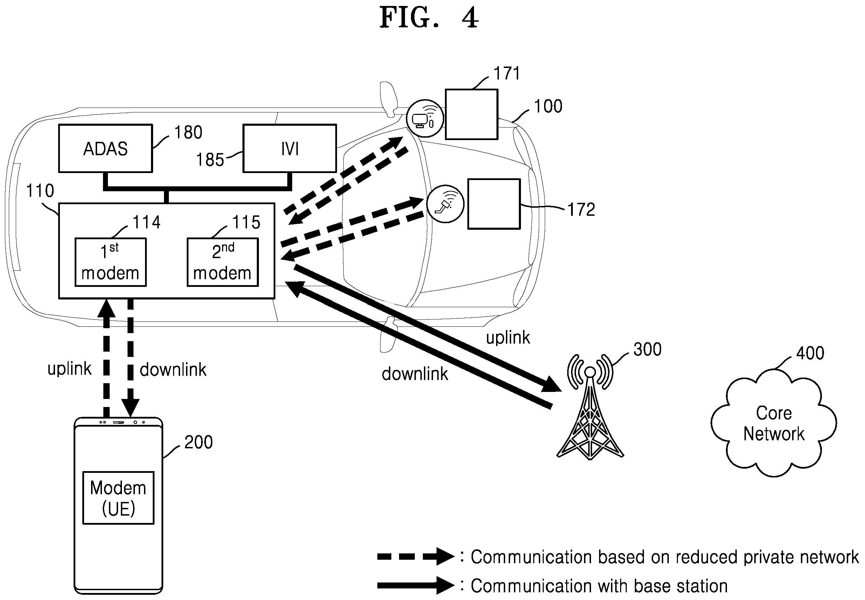

In an embodiment, a data transmission and reception operation based on the reduced private network between the vehicle 100 (e.g., the electronic device 110 of the vehicle 100) and the terminal 200 has been described with reference to FIG. 1, but embodiments of the disclosure are not limited thereto. The vehicle 100 (e.g., the electronic device 110 of the vehicle 100) according to one or more embodiments may perform data transmission and reception even with a vehicle IoT device based on the reduced private network. The embodiments of the disclosure are described with reference to FIGS. 4 to 6.

In an embodiment, the vehicle 100 (e.g., the electronic device 110 of the vehicle 100) and the terminal 200 may disconnect the wireless communication connection based on the reduced private network in operation S15.

Hereinafter, with reference to the drawings below, the electronic device 110 including a Red-eNB modem for construction of the reduced private network and an operating method thereof are described.

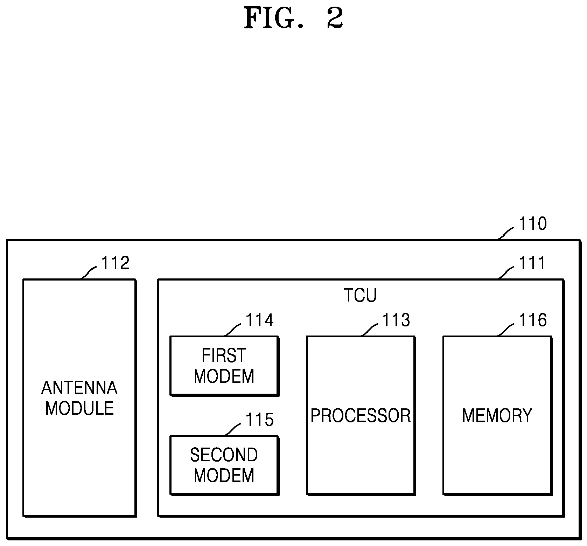

FIG. 2 illustrates the electronic device 110 according to one or more embodiments. Specifically, FIG. 2 shows a block diagram of the electronic device 110 of the vehicle 100 (see FIG. 1).

In FIG. 2, a reduced private network is used for data transmission and reception between the vehicle 100 and a device (e.g., the terminal 200 in the vehicle 100 and/or a vehicle IoT device) in the vehicle 100 and may indicate a network of which some procedures are skipped or some functions are reduced from among the procedures or functions for wireless communication between devices in the 3GPP LTE or NR communication standard, based on (or in accordance with) the data transmission and reception characteristics between the vehicle 100 and the device in the vehicle 100.

In FIG. 2, the electronic device 110 (e.g., a telematics device) is used for communication between the vehicle 100 and a base station or between the vehicle 100 and the terminal 200 (or an IoT device). In an embodiment, the electronic device 110 may be mounted in an external structure of the vehicle 100. In an embodiment, the electronic device 110 may be arranged in a metal structure constituting the roof of the vehicle 100. However, embodiments of the electronic device 110 are not limited thereto and may be arranged in the bonnet, the bumper, the pillar, or the trunk of the vehicle 100.

Referring to FIG. 2, the electronic device 110 may include a TCU 111 and an antenna module 112. The TCU 111 may include a processor 113, a first modem 114, a second modem 115, and a memory 116. In an embodiment, each of the TCU 111 and the antenna module 112 may be implemented by a logic block implemented through logic synthesis, a software block performed by the processor 113, or a combination thereof. In an embodiment, each of the TCU 111 and the antenna module 112 may be a procedure as a set of a plurality of instructions executed by the processor 113 and may be stored in the memory 116 accessible by the processor 113.

In an embodiment, the processor 113 of the TCU 111 may execute one or more instructions of a program stored in the memory 116. The processor 113 may include a hardware component configured to perform arithmetic, logic, and input/output computations and signal processing. The processor 113 may include at least one of, for example, a central processing unit (CPU), a microprocessor, a graphics processing unit, application specific integrated circuits (ASICs), digital signal processors (DSPs), digital signal processing devices (DSPDs), programmable logic devices (PLDs), and field programmable gate arrays (FPGAs) but is not limited thereto. In an embodiment, the processor 113 may include a communication processor (CP). Unless otherwise stated, operations described as being performed by the electronic device 110 may be understood to refer to operations performed by the processor 113 or caused by the processor 113.

In an embodiment, the processor 113 controls the first modem 114 to establish a first wireless communication connection with a base station and control the second modem 115 to establish a second wireless communication connection between the vehicle 100 (or the electronic device 110) and the terminal 200 based on at least one piece of pre-connection information pre-stored in the memory 116. In an embodiment, the processor 113 may control the second modem 115 to establish a third wireless communication connection between the vehicle 100 (or the electronic device 110) and an IoT device based on at least one piece of the pre-connection information pre-stored in the memory 116. A particular description thereof is made below with reference to FIG. 3.

In an embodiment, the processor 113 may control the second modem 115 to perform the least (minimal) operations for the second wireless communication connection and/or the third wireless communication connection. In an embodiment, the processor 113 skips at least one procedure among an initial access procedure (e.g., a beam management procedure, a physical random access channel (PRACH) procedure, a single side band (SSB) procedure, a physical broadcast channel (PBCH) procedure, or the like), a random access procedure, a carrier aggregation procedure, and a handover-related measurement/reporting procedure between the electronic device 110 and the terminal 200 (or an IoT device) and may control the second modem 115 to establish the second wireless communication connection and/or the third wireless communication connection based on the pre-stored pre-connection information by substituting for the procedures described above. Herein, the pre-connection information includes at least one of access frequency band information, system information, radio resource control (RRC) initial configuration value information, and registered device identification information.

In an embodiment, the processor 113 may skip a channel state-related measurement/reporting procedure between the electronic device 110 and the terminal 200 (or an IoT device) and control the second modem 115 to adjust, by substituting for the procedure described above, a modulation and coding scheme (MCS) level for data to be transmitted to the terminal 200 (or an IoT device) in response to (based on) a message acknowledge/negative acknowledge (ACK/NACK) received from the terminal 200 (or the IoT device).

In an embodiment, the processor 113 may control the second modem 115 to perform a discontinuous reception (DRX) operation based on a data transmission amount, through the second wireless communication connection or the third wireless communication connection.

In an embodiment, if there exists another terminal having performed a wireless communication connection with the electronic device 110, the processor 113 may control the second modem 115 to transmit data to the terminal 200 and the another terminal through a time division multiplexing (TDM) scheme based on information (e.g., information about the number of simultaneously supportable terminals and TDM configuration information) pre-stored in the memory 116.

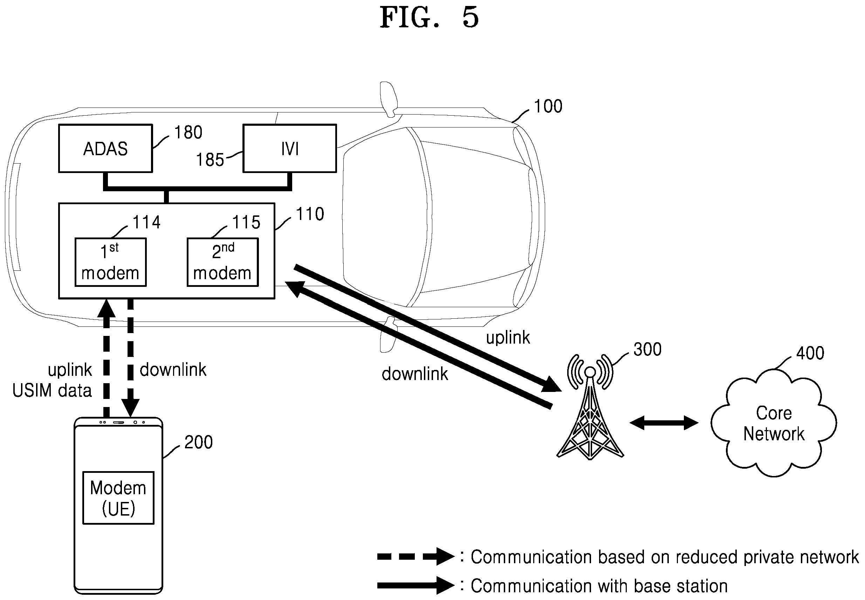

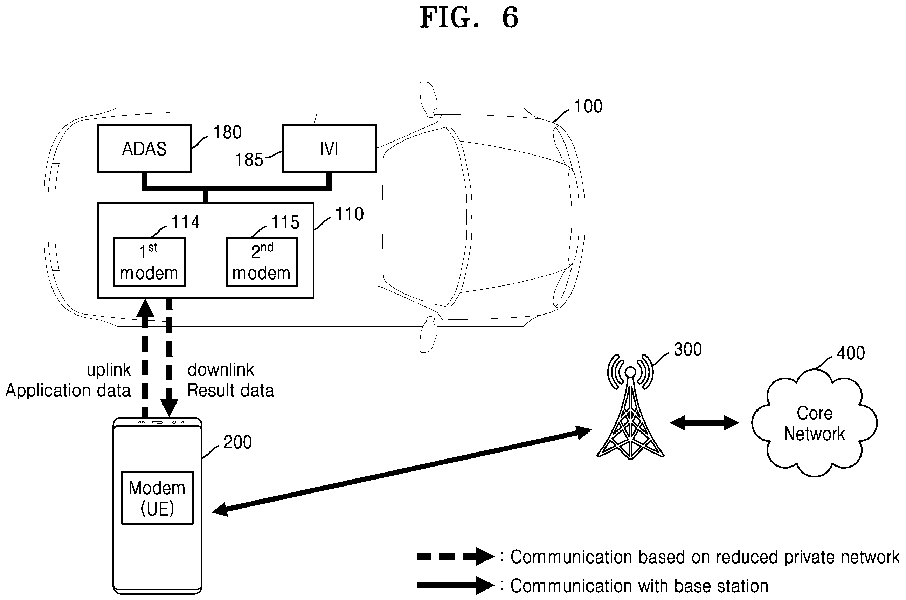

In an embodiment, the processor 113 may perform a target work based on terminal data (e.g., universal subscriber identity module (USIM) data or application data) received through the second wireless communication connection. A particular description thereof is made below with reference to FIGS. 5 and 6.

In an embodiment, the processor 113 may receive IoT device information through the third wireless communication connection and transmit the IoT device information to a controller of the vehicle 100 for a work for capability improvement of the vehicle 100. A particular description thereof is made below with reference to FIG. 4.

In an embodiment, the first modem 114 and the second modem 115 may be operatively (electrically or physically) connected to the antenna module 112 and may control an operation and/or a function of the antenna module 112. For example, the first modem 114 and the second modem 115 may establish a direct (e.g., wired) communication channel or a wireless communication channel between the vehicle 100 and an external electronic device (e.g., the terminal 200, an IoT device, or a base station) and support communication through the established communication channel.

In an embodiment, the first modem 114 may include a TCU modem (or a UE modem) configured to perform wireless communication between the vehicle 100 (e.g., the electronic device 110) and a base station in a 3GPP LTE or NR wireless communication network. For example, the first modem 114 may include the TCU modem (or the UE modem) designed based on the 3GPP LTE or NR communication standard.

In an embodiment, the first modem 114 may establish the first wireless communication connection between the vehicle 100 (e.g., the electronic device 110 of the vehicle 100) and a base station, for example, via a Uu interface.

In an embodiment, the second modem 115 is an eNB modem configured to perform the least (minimal) operations for data transmission and reception between the vehicle 100 (e.g., the electronic device 110) and the terminal 200 (or an IoT device) in the reduced private network and may be an eNB modem (hereinafter, referred to as a Red-eNB modem) of which some functions are reduced from among the functions of an existing eNB modem (e.g., a base station modem in a 3GPP LTE or NR wireless communication system). Herein, the least (minimal) operations for the data transmission and reception may include an operation (e.g., an operation of allocating a resource for the data transmission and reception) of establishing a wireless communication channel between the vehicle 100 (or the electronic device 110) and the terminal 200 (or an IoT device) in the reduced private network and an operation of performing communication through the established wireless communication channel (e.g., a data transmission and reception operation using the allocated resource). For example, the second modem 115 may skip at least one procedure (or operation) among an initial access procedure, a random access procedure, a channel state-related measurement/reporting procedure, a carrier aggregation procedure, and/or a handover-related measurement/reporting procedure between the vehicle 100 (or the electronic device 110) and the terminal 200 (or an IoT device).

In an embodiment, the second modem 115 may be designed as a Red-eNB modem of which some functions (or some procedures) are reduced based on the capability (e.g., the transmission (Tx) hardware capability) of an existing TCU modem in the reduced private network. In an embodiment, if a modem of a device (e.g., an IoT device) having established a wireless communication connection with the second modem 115 in the reduced private network is a reduced-capability (RED-CAP) modem, the second modem 115 may be designed as a Red-eNB modem of which some functions (or some procedures) are reduced from an existing eNB modem according to the 3GPP LTE/NR standard based on the capability of the RED-CAP modem.

In an embodiment, the second modem (i.e., a Red-eNB modem) 115 may be constructed based on at least one component of an existing TCU modem (e.g., the first modem 114). In an embodiment, the second modem 115 may be implemented as a Red-eNB modem by reusing or partially changing at least one hardware module (e.g., an antenna module, a Tx chain, and a MIMO layer of an existing TCU modem) of the existing TCU modem (e.g., the first modem 114). For example, the second modem 115 may operate as a Red-eNB modem by using two antennas (e.g., included in the antenna module 112), two Tx chains, and two MIMO layers of an existing TCU modem (e.g., the first modem 114).

In an embodiment, the second modem 115 may be implemented as a Red-eNB modem by updating software of an existing TCU modem (e.g., the first modem 114). In an embodiment, the second modem 115 may include, as a Red-eNB modem, the same module as at least one module among a hardware module and/or a software module included in the first modem 114.

In an embodiment, a modem of the terminal 200 in the reduced private network may be implemented as a Red-UE modem by updating software of a UE modem according to an existing LTE/NR standard.

In an embodiment, the second modem 115 may establish the second wireless communication connection between the vehicle 100 (e.g., the electronic device 110 of the vehicle 100) and the terminal 200 based on (or through) the reduced private network.

In an embodiment, the second modem 115 may establish the third wireless communication connection between the vehicle 100 (e.g., the electronic device 110 of the vehicle 100) and an IoT device based on the reduced private network.

In an embodiment, the memory 116 may include, for example, a nonvolatile memory including at least one of a flash memory type memory, a hard disk type memory, a multimedia card micro type memory, a card type memory (e.g., a secure digital (SD) or extreme digital (XD) memory or the like), read-only memory (ROM), electrically erasable programmable read-only memory (EEPROM), and programmable read-only memory (PROM) and a volatile memory, such as random access memory (RAM) or static random access memory (SRAM). The memory 116 may store instructions, a data structure, and program code which are readable by the processor 113. In an embodiment below, the processor 113 may be implemented by executing instructions or codes of a program stored in the memory 116.

The memory 116 may store various data to be used by at least one component (e.g., the processor 113) of the electronic device 110. The data may include, for example, software and input data or output data in response to a command related to the software.

In an embodiment, the memory 116 may store pre-connection information for a wireless communication connection between the vehicle 100 and the terminal 200 based on the reduced private network. The pre-connection information includes at least one of access frequency band information, system information, RRC initial configuration value information, and registered device identification information. The access frequency band information may include at least one of center frequency information, bandwidth (BW) information, and bandwidth-part (BWP) information. The system information may include at least one of management information base (MIB) information and system information block (SIB) information.

In an embodiment, the memory 116 may store information about the number of simultaneously supportable terminals and TDM configuration information when performing wireless communication with a plurality of terminals in the reduced private network.

In an embodiment, the memory 116 may store USIM data (e.g., embedded USIM (eUSIM) data) of the terminal 200 or application data of the terminal 200, which is received from the terminal 200 through the reduced private network.

In an embodiment, the memory 116 may store IoT device information or IoT device data acquired by an IoT device, which is received from the IoT device through the reduced private network.

In an embodiment, the antenna module 112 may establish a wireless communication connection with each of a base station, the terminal 200, and an IoT device and transmit and receive data through an established communication channel. In an embodiment, the antenna module 112 may further include at least one of an antenna array, a radio wave transceiver, a power management circuit, and a radio frequency integrated circuit (RFIC). For example, the antenna module 112 may include two antenna, two Tx chains, and two MIMO layers for an operation of a Red-eNB modem (e.g., the second modem 115).

As described above with reference to FIG. 2, the electronic device 110 according to one or more embodiments may construct the reduced private network by skipping some procedures or functions from among wireless communication connection procedures according to an existing 3GPP LTE/NR standard, by using a Red-eNB modem implemented by minimally changing an existing TCU modem (or a UE modem) (e.g., reusing/partially changing a hardware module or updating a software module).

FIG. 3 illustrates a wireless communication system 20 according to one or more embodiments. Specifically, FIG. 3 illustrates the wireless communication system 20 based on a reduced private network.

In FIG. 3, the solid arrow lines may indicate a wireless communication connection (e.g., the first wireless communication connection) between a base station 300 and each of devices (e.g., the electronic device 110 of the vehicle 100, a first IoT device 171, a second IoT device 172, and the terminal 200), for example, through a Uu interface. The broken line arrows may indicate a wireless communication connection (e.g., the second wireless communication connection or the third wireless communication connection) between the vehicle 100 (or the electronic device 110 of the vehicle 100) and each of devices (e.g., the first IoT device 171, the second IoT device 172, and the terminal 200) based on (through) the reduced private network. In an embodiment, the base station 300 performs a wireless communication connection with a core network 400, for example, according to the 3GPP LTE or NR communication standard to support the wireless communication connection between the devices described above.

In FIG. 3, the reduced private network is used for data transmission and reception between a vehicle and a device (e.g., an in-vehicle terminal and/or a vehicle IoT device) in the vehicle and may indicate a network of which some procedures are skipped or some functions are reduced from among the procedures or functions for wireless communication between devices (for example, in the 3GPP LTE or NR communication standard) based on the data transmission and reception characteristics between a vehicle and a device in the vehicle.

Referring to FIG. 3, the vehicle 100 may include the electronic device 110, IoT devices (e.g., the first IoT device 171 and the second IoT device 172), an ADAS 180, and IVI 185 and the electronic device 110 may include the first modem 114 and the second modem 115.

In an embodiment, a modem of an IoT device (e.g., the first IoT device 171 or the second IoT device 172) may include a RED-CAP modem in which the specifications of some hardware components are limited, based on the characteristics of the reduced private network in a UE modem of the LTE/NR standard. For example, the RED-CAP modem may include a modem which includes a predefined (or limited) number of antennas (e.g., one or two antennas), makes an access through a particular access frequency band (e.g., a 20Mhz band for FR-1 or a 100Mhz band for FR-2), and is based on a particular signal modulation scheme (e.g., 64QAM).

In an embodiment, the first modem 114 of the electronic device 110 may include a modem (e.g., a TCU modem or a UE modem according to the LTE/NR standard) configured to support the first wireless communication connection between the electronic device 110 and the base station 300. In an embodiment, the second modem 115 of the electronic device 110 may include a Red-eNB modem configured to support the second wireless communication connection between the electronic device 110 and the terminal 200 and/or the third wireless communication connection between the electronic device 110 and an IoT device (e.g., the first IoT device 171 or the second IoT device 172) in the reduced private network. For example, the second modem 115 may include the same module as at least one module among a hardware module and/or a software module included in the first modem 114.

In an embodiment, the electronic device 110 may establish the first wireless communication connection with the base station 300 using the first modem 114. For example, the electronic device 110 may establish the first wireless communication connection with the base station 300 according to a procedure (e.g., an initial access procedure, a random access procedure, or the like) of the 3GPP LTE or NR communication standard. The electronic device 110 may perform a downlink operation of receiving data from the base station 300 and an uplink operation of transmitting data to the base station 300.

In an embodiment, the electronic device 110 may establish the second wireless communication connection with the terminal 200 or the third wireless communication connection with an IoT device (e.g., the first IoT device 171 or the second IoT device 172) according to a reduced wireless communication connection procedure through the second modem 115 (e.g., a Red-eNB modem).

In an embodiment, the electronic device 110 skips at least one procedure among an initial access procedure (e.g., a beam management procedure, a PRACH procedure, an SSB procedure, a PBCH procedure, or the like), a random access procedure, a carrier aggregation procedure, and/or a handover-related measurement/reporting procedure between the electronic device 110 and the terminal 200 (or an IoT device) by controlling the second modem 115 according to the reduced wireless communication connection procedure. In addition, the electronic device 110 may control the second modem 115 according to the reduced wireless communication connection procedure to establish the second wireless communication connection and/or the third wireless communication connection based on pre-stored pre-connection information by substituting for the aforementioned procedures (at least one of the initial access procedure, the random access procedure, the carrier aggregation procedure, and/or the handover-related measurement/reporting procedure). Herein, the pre-connection information includes at least one of access frequency band information, system information, RRC initial configuration value information, and registered device identification information. The access frequency band information may include at least one of center frequency information, BW information, and BWP information. The system information may include at least one of MIB information and SIB information.

For example, the electronic device 110 may enter an RRC-CONNECTED mode with the terminal 200 (e.g., an IoT device) by skipping an access frequency band search procedure by using the pre-connection information (e.g., the access frequency band information) according to the reduced wireless communication connection procedure and establishing the second wireless communication connection and/or the third wireless communication connection according to timing sync. In the RRC-CONNECTED mode, the electronic device 110 may transmit a physical downlink control channel (PDCCH) or a physical downlink shared channel (PDSCH) to the terminal 200 (or an IoT device) and receive a physical uplink control channel (PUCCH) or a physical uplink shared channel (PUSCH) from the terminal 200 (or an IoT device), through the second modem 115. For example, in the RRC-CONNECTED mode, the electronic device 110 may confirm completion of the second wireless communication connection between the electronic device 110 and the terminal 200 by receiving a PUCCH from the terminal 200.

In an embodiment, the electronic device 110 may control the second modem 115 according to the reduced wireless communication connection procedure to skip the channel state-related measurement/reporting procedure between the electronic device 110 and the terminal 200 (or an IoT device) and adjust, by substituting for the procedure described above, an MCS level for data to be transmitted to the terminal 200 (or the IoT device) in response to a message (ACK/NACK) received from the terminal 200 (or the IoT device). For example, if an ACK message is received from the terminal 200 (or an IoT device), the electronic device 110 may increase the MCS level for data to be transmitted to the terminal 200 (or the IoT device), using the second modem 115. For example, if a NACK message is received from the terminal 200 (or an IoT device), the electronic device 110 may decrease the MCS level for data to be transmitted to the terminal 200 (or the IoT device), using the second modem 115.

In an embodiment, the electronic device 110 may control the second modem 115 to perform a DRX operation based on a data transmission amount through the second wireless communication connection or the third wireless communication connection according to the reduced wireless communication connection procedure. For example, the electronic device 110 may monitor uplink or downlink data for a first duration (e.g., a wake-up duration) and stop the monitoring for battery saving for a second duration (e.g., a sleep duration), based on a predefined period.

In an embodiment, in a case that the data transmission amount through the second wireless communication connection or the third wireless communication connection is less than a threshold, the electronic device 110 may switch the mode of the second modem 115 from the RRC-CONNECTED mode to an RRC-IDLE mode. In an embodiment, in a case that the data transmission amount through the second wireless communication connection or the third wireless communication connection is greater than or equal to the threshold, the electronic device 110 may switch the mode of the second modem 115 from the RRC-IDLE mode to the RRC-CONNECTED mode. In some embodiments in which the second modem is used to establish the second wireless communication connection, but not the third wireless communication connection, the electronic device 110 may switch the mode of the second modem 115 from the RRC-IDLE mode to the RRC-CONNECTED mode in response to the data transmission amount through the second wireless communication connection being greater than or equal to the threshold.

In an embodiment, when there exists another terminal having performed a wireless communication connection with the electronic device 110, the electronic device 110 may control the second modem 115 to transmit data to the terminal 200 and the other terminal through a TDM scheme based on information (e.g., information about the number of simultaneously supportable terminals and TDM configuration information) pre-stored in the memory 116 (see FIG. 2) according to the reduced wireless communication connection procedure. For example, if both of a first terminal and a second terminal access the electronic device 110, the electronic device 110 may communicate with the first terminal based on a (2n-1)-th slot (n is an integer that is not zero; e.g., 1, 3, 5-th slot) allocated to the first terminal and communicate with the second terminal based on a 2n-th slot (n is an integer that is not zero; e.g., 2, 4, 6-th slot) allocated to the second terminal.

In an embodiment, the electronic device 110 may perform an uplink operation of receiving data from the terminal 200 (or an IoT device (e.g., the first IoT device 171 or the second IoT device 172)) and a downlink operation of transmitting data to the terminal 200 (or the IoT device (e.g., the first IoT device 171 or the second IoT device 172)), based on the reduced private network (e.g., the second wireless communication connection or the third wireless communication connection).

The electronic device 110 according to one or more embodiments may construct the reduced private network by skipping some functions or procedures (e.g., at least one of an initial access procedure, a random access procedure, a channel state-related measurement/reporting procedure, a carrier aggregation procedure, and a handover-related measurement/reporting procedure) in existing LTE/NR according to the reduced wireless communication connection procedure between the electronic device 110 and the terminal 200 (or an IoT device (e.g., the first IoT device 171 or the second IoT device 172)), thereby minimizing a control overhead for a wireless communication connection between devices.

FIG. 4 illustrates an operation of the electronic device 110, according to one or more embodiments. Specifically, FIG. 4 illustrates an operation of the electronic device 110 using device information of an IoT device (e.g., the first IoT device 171 or the second IoT device 172) based on a reduced private network. The description made with reference to FIGS. 1 to 3 is not repeated in a description of FIG. 4.

In FIG. 4, the reduced private network is used for data transmission and reception between the vehicle 100 and a device (e.g., the terminal 200 in the vehicle 100 and/or a vehicle IoT device) in the vehicle 100 and may indicate a network of which some procedures are skipped or some functions are reduced from among the procedures or functions for wireless communication between devices in the 3GPP LTE or NR communication standard based on the data transmission and reception characteristics between the vehicle 100 and the device in the vehicle 100.

In FIG. 4, the first wireless communication connection for data transmission and reception (e.g., uplink or downlink) between the electronic device 110 of the vehicle 100 and the base station 300, the second wireless communication connection between the electronic device 110 and the terminal 200, and the third wireless communication connection between the electronic device 110 and at least one IoT device (e.g., the first IoT device 171 and the second IoT device 172) are performed. In an embodiment, the base station 300 performs a wireless communication connection with the core network 400 according to the 3GPP LTE or NR communication standard to support the wireless communication connection between the devices described above. In some embodiments, an operation (e.g., a wireless communication channel establishment operation) for the second wireless communication connection and the third wireless communication connection is performed based on the reduced wireless communication connection procedure of FIG. 3. A particular description thereof is made above with reference to FIG. 3.

In FIG. 4, the solid arrow lines may indicate a wireless communication connection between the base station 300 and each of devices (e.g., the electronic device 110 of the vehicle 100, the first IoT device 171, the second IoT device 172, and the terminal 200) based on (through) a Uu interface. The broken arrow lines may indicate a wireless communication connection between the vehicle 100 (or the electronic device 110 of the vehicle 100) and each of devices (e.g., the first IoT device 171, the second IoT device 172, and the terminal 200) based on the reduced private network.

Referring to FIG. 4, the vehicle 100 may include the electronic device 110, IoT devices (e.g., the first IoT device 171 and the second IoT device 172), the ADAS 180, and the IVI 185 and the electronic device 110 may include the first modem 114 and the second modem 115.

In an embodiment, the first modem 114 of the electronic device 110 may include a modem (e.g., a TCU modem or a UE modem according to the LTE/NR standard) configured to support the first wireless communication connection between the electronic device 110 and the base station 300. In an embodiment, the second modem 115 of the electronic device 110 may include a Red-eNB modem (see the description of FIG. 2) configured to support the second wireless communication connection between the electronic device 110 and the terminal 200 and/or the third wireless communication connection between the electronic device 110 and an IoT device (e.g., the first IoT device 171 or the second IoT device 172) in the reduced private network. For example, the second modem 115 may include the same module as at least one module among a hardware module and/or a software module included in the first modem 114.

In an embodiment, a modem of an IoT device (e.g., the first IoT device 171 or the second IoT device 172) may include a RED-CAP modem in which the specifications of some hardware components are limited by reflecting the characteristics of the reduced private network in a UE modem according to the LTE/NR standard. For example, the RED-CAP modem may include a modem which includes a predefined (or limited) number of antennas (e.g., one or two antennas), makes an access through a particular access frequency band (e.g., a 20Mhz band for FR-1 or a 100Mhz band for FR-2), and modulates a signal based on a particular signal modulation scheme (e.g., 64QAM).

In an embodiment, the electronic device 110 may selectively establish the third wireless communication connection with at least one of a plurality of IoT devices (e.g., the first IoT device 171 and the second IoT device 172) using the second modem 115. Herein, the plurality of IoT devices (e.g., the first IoT device 171 and the second IoT device 172) are devices capable of performing a wireless communication connection with the electronic device 110 (e.g., a TCU of the electronic device 110) and may include vehicle sensors (e.g., a temperature sensor, a global positioning system (GPS) sensor, a gyro sensor, and the like), a camera module, and the like.

In an embodiment, the electronic device 110 may acquire IoT device information from at least one IoT device through the third wireless communication connection (e.g., the reduced private network). Herein, the IoT device information is information needed for a work to be performed by the ADAS 180 or the IVI 185 in the vehicle 100 and may include internal/external temperature information of the vehicle 100, information about distances to surrounding vehicles, and the like.

In an embodiment, the electronic device 110 may transmit the IoT device information to the ADAS 180 or the IVI 185. For example, the ADAS 180 or the IVI 185 may perform various data processing works for capability improvement of the vehicle 100 and/or user experience improvement based on the IoT device information.

FIG. 5 illustrates an operation of the electronic device 110, according to one or more embodiments.

In detail, FIG. 5 illustrates an operation of the electronic device 110 using USIM data of the terminal 200 based on a reduced private network. The description made with reference to FIGS. 1 to 4 is not repeated in a description of FIG. 5.

In FIG. 5, the reduced private network is used for data transmission and reception between the vehicle 100 and a device (e.g., the terminal 200 in the vehicle 100 and/or a vehicle IoT device) in the vehicle 100 and may indicate a network of which some procedures are skipped or some functions are reduced from among the procedures or functions for wireless communication between devices in the 3GPP LTE or NR communication standard based on the data transmission and reception characteristics between the vehicle 100 and the device in the vehicle 100.

In FIG. 5, the first wireless communication connection for data transmission and reception (e.g., uplink or downlink) between the electronic device 110 of the vehicle 100 and the base station 300 and the second wireless communication connection between the electronic device 110 and the terminal 200 are performed. In an embodiment, the base station 300 performs a wireless communication connection with the core network 400 according to the 3GPP LTE or NR communication standard to support the wireless communication connection between the devices described above. In an embodiment, an operation (e.g., a wireless communication channel establishment operation) for the second wireless communication connection is performed based on the reduced wireless communication connection procedure of FIG. 3. A particular description thereof is made above with reference to FIG. 3.

In FIG. 5, the solid arrow lines may indicate a wireless communication connection between the base station 300 and the electronic device 110 or between the base station 300 and the core network 400 based on (through) a Uu interface. The broken arrow lines may indicate a wireless communication connection between the vehicle 100 (or the electronic device 110 of the vehicle 100) and the terminal 200 based on the reduced private network.

Referring to FIG. 5, the vehicle 100 may include the electronic device 110, the ADAS 180, and the IVI 185 and the electronic device 110 may include the first modem 114 and the second modem 115.

In an embodiment, the first modem 114 of the electronic device 110 may include a modem (e.g., a TCU modem or a UE modem according to the LTE/NR standard) configured to support the first wireless communication connection between the electronic device 110 and the base station 300. In an embodiment, the second modem 115 of the electronic device 110 may include a Red-eNB modem (see the description of FIG. 2) configured to support the second wireless communication connection between the electronic device 110 and the terminal 200 in the reduced private network. For example, the second modem 115 may include the same module as at least one module among a hardware module and/or a software module included in the first modem 114.

In an embodiment, when a user carrying the terminal 200 boards on the vehicle 100, the electronic device 110 may establish the second wireless communication connection with the terminal 200 by using the second modem 115.

In an embodiment, the electronic device 110 may receive the USIM data (e.g., eUSIM data) of the terminal 200 from the terminal 200 through an uplink of the second wireless communication connection (e.g., the reduced private network). The USIM data (e.g., eUSIM data) of the terminal 200 may include data of at least one of subscriber identification information (SII) and subscriber terminal information of the terminal 200. Herein, the term "subscriber" indicates a user who uses a network service provided by a communication service provider through SII uniquely assigned to the user who uses the terminal 200. In addition, the term "SII" may include at least one of an international mobile subscriber identity (IMSI), a temporary mobile subscriber identity (TMSI), an integrated circuit card identifier (ICCID), a service provider network (SPN), and a globally unique temporary identifier (GUTI) of the terminal 200. The USIM data according to one or more embodiments may further include various identification data of the terminal 200 in addition to the information described above.

In an embodiment, the electronic device 110 may establish a fourth wireless communication connection with the base station 300 by using the USIM data (e.g., eUSIM data) of the terminal 200. The electronic device 110 may disconnect the first wireless communication connection in response to performing the fourth wireless communication connection. The electronic device 110 may perform a data uplink operation or a data downlink operation with the base station 300 through the fourth wireless communication connection. FIG. 5 shows that a base station 300 which the terminal 200 has accessed through the Uu interface is the same as the base station 300 which the electronic device 110 has accessed through the Uu interface. Embodiments of the disclosure are not limited thereto. According to one or more embodiments, the base station which the terminal 200 has accessed through the Uu interface may be an external base station that is different from the base station 300 which the electronic device 110 has accessed through the Uu interface.

In an embodiment, the electronic device 110 may transmit, to a target component (e.g., the ADAS 180, the IVI 185, or a display of the vehicle 100) of the vehicle 100, a control signal for performing at least one function of the terminal 200 in the vehicle 100. Herein, the target component of the vehicle 100 may indicate an internal module or an application of the vehicle 100 corresponding to at least one function of the terminal 200. For example, the electronic device 110 may transmit image data and a control signal received through the fourth wireless communication connection to the display module of the vehicle 100, to perform, in the vehicle 100, a media playback function of the terminal 200.

According to an apparatus and an operation according to one or more embodiments, the electronic device 110 of the vehicle 100 performs direct communication with the base station 300 (instead of the terminal 200) based on the USIM data of the terminal 200 and performs, instead in the vehicle 100, a function of the terminal 200, thereby reducing power consumption of the terminal 200, and performs the function of the terminal 200 by using high computing power of the vehicle 100, thereby having a technical effect of improving a user experience.

FIG. 6 illustrates an operation of the electronic device 110, according to one or more embodiments. Specifically, FIG. 6 illustrates an operation of the electronic device 110 using application data of the terminal 200 based on a reduced private network. The description made with reference to FIGS. 1 to 5 is not repeated in a description of FIG. 6.

In FIG. 6, the reduced private network is used for data transmission and reception between the vehicle 100 and a device (e.g., the terminal 200 in the vehicle 100 and/or a vehicle IoT device) in the vehicle 100 and may indicate a network of which some procedures are skipped or some functions are reduced from among the procedures or functions for wireless communication between devices in the 3GPP LTE or NR communication standard based on the data transmission and reception characteristics between the vehicle 100 and the device in the vehicle 100.

In FIG. 6, the first wireless communication connection for data transmission and reception (e.g., uplink or downlink) between the electronic device 110 of the vehicle 100 and the base station 300 and the second wireless communication connection between the electronic device 110 and the terminal 200 are performed. In an embodiment, the base station 300 performs a wireless communication connection with the core network 400 according to the 3GPP LTE or NR communication standard to support the wireless communication connection between the devices described above. In an embodiment, an operation (e.g., a wireless communication channel establishment operation) for the second wireless communication connection is performed based on the reduced wireless communication connection procedure of FIG. 3. A particular description thereof is made above with reference to FIG. 3.

In FIG. 6, the solid arrow lines may indicate a wireless communication connection between the base station 300 and the electronic device 110 or between the base station 300 and the core network 400 based on (through) a Uu interface. The broken arrow lines may indicate a wireless communication connection between the vehicle 100 (or the electronic device 110 of the vehicle 100) and the terminal 200 based on the reduced private network.

Referring to FIG. 6, the vehicle 100 may include the electronic device 110, the ADAS 180, and the IVI 185 and the electronic device 110 may include the first modem 114 and the second modem 115.

In an embodiment, the first modem 114 of the electronic device 110 may include a modem (e.g., a TCU modem or a UE modem according to the LTE/NR standard) configured to support the first wireless communication connection between the electronic device 110 and the base station 300. In an embodiment, the second modem 115 of the electronic device 110 may include a Red-eNB modem (see the description of FIG. 2) configured to support the second wireless communication connection between the electronic device 110 and the terminal 200 in the reduced private network. For example, the second modem 115 may include the same module as at least one module among a hardware module and/or a software module included in the first modem 114.

In an embodiment, when a user carrying the terminal 200 boards on the vehicle 100, the electronic device 110 may establish the second wireless communication connection with the terminal 200 by using the second modem 115 (see FIG. 3).

In an embodiment, the electronic device 110 may receive the application data of the terminal 200 from the terminal 200 through an uplink of the second wireless communication connection (e.g., the reduced private network). The application data of the terminal 200 may include data which requires high-level computation processing or data processing among mobile application data which the terminal 200 has received from the base station 300. For example, the terminal 200 may transmit the application data to the electronic device 110 through a high-speed communication frequency band (e.g., an FR-2 band).

In an embodiment, the electronic device 110 may transmit the application data received from the terminal 200 to a computation component (e.g., the ADAS 180, the IVI 185, or the like) of the vehicle 100. The electronic device 110 may control the computation component (e.g., the ADAS 180, the IVI 185, or the like) of the vehicle 100 to generate result data by performing computation processing on the application data.

In an embodiment, the electronic device 110 may transmit the generated result data to the terminal 200 through a downlink of the second wireless communication connection (e.g., the reduced private network). For example, the electronic device 110 may transmit the result data to the terminal 200 through a high-speed communication frequency band (e.g., an FR-2 band). The terminal 200 may transmit the received result data to the base station 300.

According to one or more embodiments, the electronic device 110 of the vehicle 100 performs data computation by using the computation component of the vehicle 100 based on the application data of the terminal 200, thereby reducing power consumption of the terminal 200, and uses high computing power of the vehicle 100, thereby having a technical effect of preventing a data processing delay.

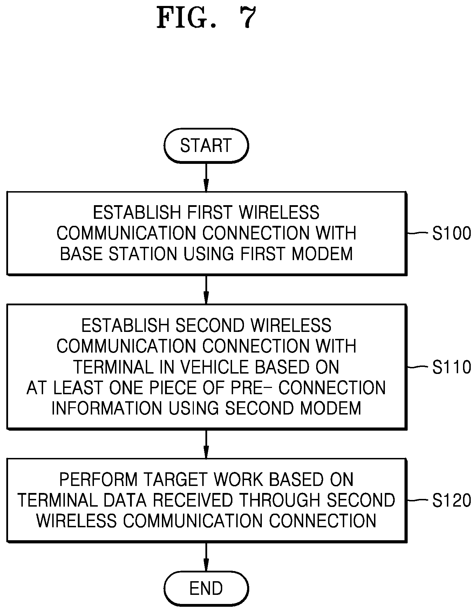

FIG. 7 is a flowchart illustrating an operating method of an electronic device, according to one or more embodiments.

Referring to FIG. 7, a method of wireless communication between the electronic device 110 and the terminal 200 based on a reduced private network may include operations S100 to S120. The description made with reference to FIGS. 1 to 6 is not repeated in a description of FIG. 7. The electronic device 110 and the terminal 200 in FIG. 7 may correspond to the electronic device 110 and the terminal 200 in FIGS. 1 to 6, respectively.

In FIG. 7, the reduced private network is a network for data transmission and reception between the vehicle 100 and a device (e.g., the terminal 200 in the vehicle 100 and/or a vehicle IoT device) in the vehicle 100 and may indicate a network of which some procedures are skipped or some functions are reduced from among the procedures or functions for wireless communication between devices in the 3GPP LTE or NR communication standard based on the data transmission and reception characteristics between the vehicle 100 and the device in the vehicle 100.

In FIG. 7, the electronic device 110 may include a first modem (e.g., the first modem 114 of FIGS. 2 to 6) configured to establish a wireless communication connection with a base station and a second modem (e.g., the second modem 115 of FIGS. 2 to 6) that is a Red-eNB modem configured to establish a wireless communication connection with the terminal 200 and/or an IoT device in the reduced private network (see FIG. 2).

In operation S100, the electronic device 110 may establish the first wireless communication connection with a base station using the first modem 114 (see FIGS. 2 to 6). For example, the electronic device 110 may establish the first wireless communication connection with the base station 300 according to a wireless communication connection procedure (e.g., an initial access procedure, a random access procedure, or the like) according to the 3GPP LTE or NR communication standard.

In operation S110, the electronic device 110 establishes the second wireless communication connection with a terminal in a vehicle, based on at least one piece of pre-connection information, using the second modem 115 (see FIGS. 2 to 6) (see FIG. 3). Herein, the pre-connection information may include at least one of access frequency band information, system information, RRC initial configuration value information, and registered device identification information. The access frequency band information may include at least one of center frequency information, BW information, and BWP information. The system information may include at least one of MIB information and SIB information. The electronic device 110 may establish the second wireless communication connection with the terminal 200 according to the reduced wireless communication connection procedure of FIG. 3.

In an embodiment, in a first case that an ACK message is received from the terminal 200 through the second wireless communication connection, the electronic device 110 may increase the MCS level for data to be transmitted to the terminal 200. In an embodiment, in a second case that a NACK message is received from the terminal 200 through the second wireless communication connection, the electronic device 110 may decrease the MCS level for data to be transmitted to the terminal 200.

In an embodiment, the electronic device 110 may perform a DRX operation based on a data transmission amount through the second wireless communication connection.

In an embodiment, in a case that the data transmission amount through the second wireless communication connection is less than a threshold, the electronic device 110 may switch the mode of the second modem 115 from the RRC-CONNECTED mode to the RRC-IDLE mode. In an embodiment, in another case that the data transmission amount through the second wireless communication connection is greater than or equal to the threshold, the electronic device 110 may switch the mode of the second modem 115 from the RRC-IDLE mode to the RRC-CONNECTED mode.

In an embodiment, if there exists another terminal having performed a wireless communication connection with the electronic device 110, the electronic device 110 may perform data transmission and reception with the terminal 200 and/or the other terminal through a TDM scheme in the reduced private network.

In an embodiment, the electronic device 110 may skip at least one procedure among an initial access procedure, a random access procedure, a channel state-related measurement/reporting procedure, a carrier aggregation procedure, and/or a handover-related measurement/reporting procedure between the electronic device 110 and the terminal 200 in the reduced private network.

In operation S120, the electronic device 110 may perform a target work based on terminal data received through the second wireless communication connection. Herein, the target work of the terminal 200 may include a work related to the terminal data (e.g., USIM data or application data of the terminal 200).

In an embodiment, the electronic device 110 may receive the USIM data of the terminal 200 (or eUSIM data of the terminal 200) from the terminal 200 based on the wireless communication connection, establish the fourth wireless communication connection with an external base station (e.g., a base station which the terminal 200 has accessed through a Uu interface) by using the USIM data, disconnect the first wireless communication connection in response to performing the fourth wireless communication connection, and transmit, to the target component, a control signal for performing at least one function of the terminal 200 in the target component of the vehicle 100 (see FIG. 5).

In an embodiment, the electronic device 110 may receive application data from the terminal 200 based on the second wireless communication connection, control a computation component (e.g., the ADAS 180 or the IVI 185) of the vehicle 100 to generate result data by performing computation processing on the application data, and transmit the result data to the terminal 200 based on the second wireless communication connection.

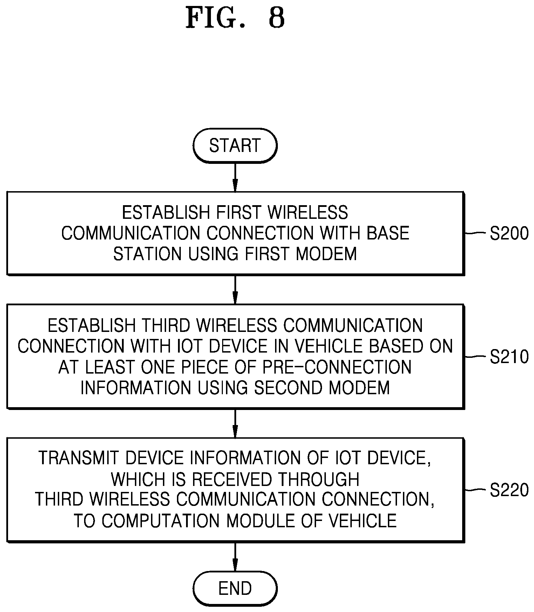

FIG. 8 illustrates an operating method of an electronic device, according to one or more embodiments. Specifically, in FIG. 8, a method of wireless communication between the electronic device 110 and an IoT device based on a reduced private network may include operations S200 to S220. The description made with reference to FIGS. 1 to 7 is not repeated in a description of FIG. 8. The electronic device 110 and the terminal 200 in FIG. 8 may correspond to the electronic device 110 and the terminal 200 in FIGS. 1 to 7, respectively.

In FIG. 8, the reduced private network is used for data transmission and reception between the vehicle 100 and a device (e.g., the terminal 200 in the vehicle 100 and/or a vehicle IoT device) in the vehicle 100 and may indicate a network of which some procedures are skipped or some functions are reduced from among the procedures or functions for wireless communication between devices in the 3GPP LTE or NR communication standard based on the data transmission and reception characteristics between the vehicle 100 and the device in the vehicle 100.

In FIG. 8, the electronic device 110 may include a first modem (e.g., the first modem 114 of FIGS. 2 to 6) configured to establish a wireless communication connection with a base station and a second modem (e.g., the second modem 115 of FIGS. 2 to 6) that is a Red-eNB modem configured to establish a wireless communication connection with the terminal 200 and/or an IoT device in the reduced private network (see FIG. 2).

In FIG. 8, the IoT device (e.g., the first IoT device 171 (see FIGS. 3 and 4) or the second IoT device 172 (see FIGS. 3 and 4)) is an external device capable of communicating with the electronic device 110 in the reduced private network and may include a RED-CAP modem (see FIG. 4). For example, the IoT device (e.g., the first IoT device 171 (see FIGS. 3 and 4) or the second IoT device 172 (see FIGS. 3 and 4)) may include a RED-CAP modem which includes a predefined (or limited) number of antennas (e.g., one or two antennas), makes an access through a particular access frequency band (e.g., a 20Mhz band for FR-1 or a 100Mhz band for FR-2), and is based on a particular signal modulation scheme (e.g., 64QAM).

In operation S200, the electronic device 110 may establish the first wireless communication connection with a base station using a first modem (e.g., the first modem 114 of FIGS. 2 to 6). For example, the electronic device 110 may establish the first wireless communication connection with the base station 300 according to a wireless communication connection procedure (e.g., an initial access procedure, a random access procedure, or the like) according to the 3GPP LTE or NR communication standard.

In operation S210, the electronic device 110 may establish the third wireless communication connection with an IoT device (e.g., the first IoT device 171 or the second IoT device 172 (see FIGS. 3 and 4)) in a vehicle based on at least one piece of pre-connection information, using a second modem (e.g., the second modem 115 of FIGS. 2 to 6). Herein, the pre-connection information includes at least one of access frequency band information, system information, RRC initial configuration value information, and registered device identification information. The access frequency band information may include at least one of center frequency information, BW information, and BWP information. The system information may include at least one of MIB information and SIB information. The electronic device 110 may establish the third wireless communication connection with the IoT device (e.g., the first IoT device 171 or the second IoT device 172 (see FIGS. 3 and 4)) according to the reduced wireless communication connection procedure of FIG. 3.

In an embodiment, in a first case that an ACK message is received from the IoT device (e.g., the first IoT device 171 or the second IoT device 172 (see FIGS. 3 and 4)) through the third wireless communication connection, the electronic device 110 may increase the MCS level for data to be transmitted to the IoT device (e.g., the first IoT device 171 or the second IoT device 172 (see FIGS. 3 and 4)). In an embodiment, in a second case that a NACK message is received from the IoT device (e.g., the first IoT device 171 or the second IoT device 172 (see FIGS. 3 and 4)) through the third wireless communication connection, the electronic device 110 may decrease the MCS level for data to be transmitted to the IoT device (e.g., the first IoT device 171 or the second IoT device 172 (see FIGS. 3 and 4)).

In an embodiment, the electronic device 110 may perform a DRX operation based on a data transmission amount through the third wireless communication connection.

In an embodiment, if the data transmission amount through the third wireless communication connection is less than a threshold, the electronic device 110 may switch the mode of the second modem 115 from the RRC-CONNECTED mode to the RRC-IDLE mode. In an embodiment, if the data transmission amount through the third wireless communication connection is greater than or equal to the threshold, the electronic device 110 may switch the mode of the second modem 115 from the RRC-IDLE mode to the RRC-CONNECTED mode.

In an embodiment, if there exist a plurality of IoT devices (e.g., the first IoT device 171 and the second IoT device 172 (see FIGS. 3 and 4)) having performed a wireless communication connection with the electronic device 110, the electronic device 110 may perform data transmission and reception with the plurality of IoT devices (e.g., the first IoT device 171 and the second IoT device 172 (see FIGS. 3 and 4)) through a TDM scheme in the reduced private network.

In an embodiment, the electronic device 110 may skip at least one procedure among an initial access procedure, a random access procedure, a channel state-related measurement/reporting procedure, a carrier aggregation procedure, and/or a handover-related measurement/reporting procedure between the electronic device 110 and the IoT device (e.g., the first IoT device 171 or the second IoT device 172 (see FIGS. 3 and 4)) in the reduced private network.

In operation S220, the electronic device 110 may transmit device information of the IoT device, which is received through the third wireless communication connection, to a computation component of the vehicle.

In an embodiment, the electronic device 110 may receive device information from the IoT device (e.g., an external device) based on the third wireless communication connection and transmit the device information to the ADAS 180 or the IVI 185 in the vehicle 100 (see FIG. 4). Herein, the device information of the IoT device is information needed for a work to be performed by the ADAS 180 or the IVI 185 in the vehicle 100 and may include internal/external temperature information of the vehicle 100, information about distances to surrounding vehicles, and the like. In an embodiment, the electronic device 110 may transmit the IoT device information to the ADAS 180 or the IVI 185. For example, the ADAS 180 or the IVI 185 may perform various data processing works for capability improvement of the vehicle 100 and/or user experience improvement based on the IoT device information.

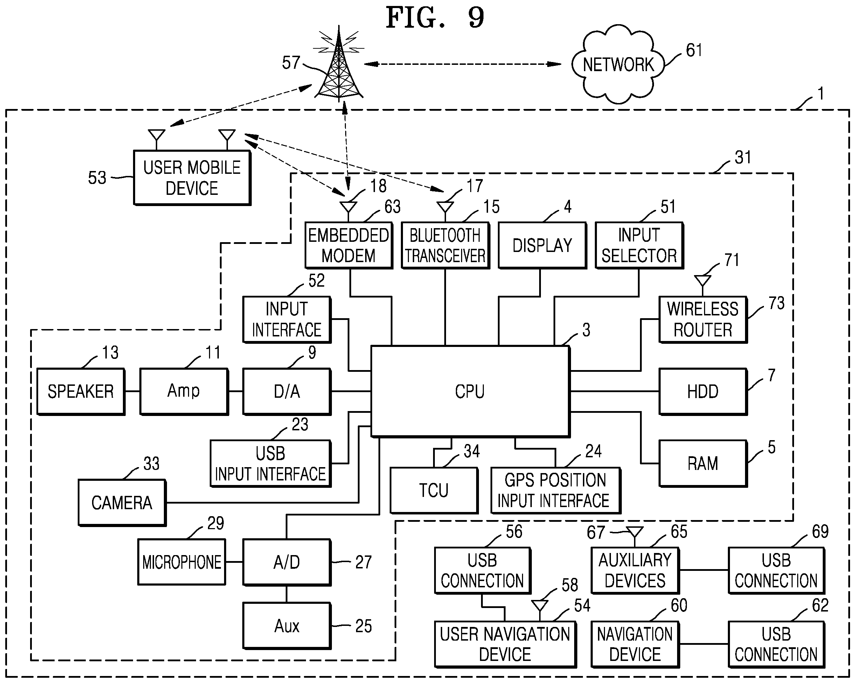

FIG. 9 illustrates a vehicle communication system 1 according to one or more embodiments. Specifically, in FIG. 9, the vehicle communication system 1 may include a reduced private network for data transmission and reception between the vehicle 100 (see FIG. 1) and a device (e.g., an in-vehicle terminal and/or a vehicle IoT device) in the vehicle 100.

Referring to FIG. 9, a block diagram of the vehicle communication system 1 according to one or more embodiments is shown. The vehicle communication system 1 indicates a set of electronic devices for transmitting and receiving data related to the vehicle 100 and simultaneously controlling driving of the vehicle 100 or an operation of an auxiliary device (e.g., opening or closing of a window or a door) of the vehicle 100. An electronic device included in the vehicle communication system 1 may be a device mounted in the vehicle 100, a device connected in a wired or wireless manner to the device mounted in the vehicle 100, or a device located in the vicinity of the vehicle 100. The vehicle communication system 1 shown in FIG. 9 may include the electronic device 110 shown in FIGS. 1 to 6.

Not all the components shown in FIG. 9 are essential components, and the vehicle communication system 1 may be implemented by components more or less than the components shown in FIG. 9.

The vehicle communication system 1 shown in FIG. 9 may include a TCU 34 according to one or more embodiments. In FIG. 9, the electronic device 31 may correspond to the electronic device 110 of FIG. 2. The TCU 34 may correspond to the TCU 111 of FIG. 2. The TCU 34 may be configured to support wireless mobile communication for the vehicle 100. The TCU 34 may include a separate processor configured to control an operation of the TCU 34. In addition, the first modem 114 and the second modem 115 of FIGS. 2 to 6 may be included in the TCU 34 of FIG. 9 or located outside the TCU 34 and connected to the TCU 34.

The vehicle communication system 1 may include various IoT devices capable of performing a wireless communication connection with the TCU 34 to acquire context information of the inside or outside of the vehicle 100. For example, the vehicle communication system 1 may include a camera 33, a microphone 29, an input interface 52, and the like. In addition, the vehicle communication system 1 may include a communication module configured to receive information from the outside, various sensors (e.g., a radar sensor, a light detection and ranging (LiDAR) sensor, and the like) configured to acquire external environment information of the vehicle 100, and various sensors configured to acquire internal context information of the vehicle 100. The vehicle communication system 1 may receive the external environment information of the vehicle 100 and the internal context information of the vehicle 100 from various IoT devices based on the reduced private network.

The camera 33 is for a video signal input and may process an image frame of a still image, a video, or the like obtained by an image sensor. The image frame processed by the camera 33 may be stored in a memory or transmitted to the outside through a communication module. Two or more cameras 33 may be provided according to an implementation example. For example, the camera 33 may be implemented in various forms, such as a front camera, a rear camera, a left camera, a right camera, an internal camera, and a block box camera. In addition, the camera 33 according to one or more embodiments may include an infrared camera. The camera 33 may acquire background information related to an object, a terrain, and a road existing outside the vehicle 100. The camera 33 may acquire a surrounding image of the vehicle 100 and transmit the acquired surrounding image to a CPU 3 through the reduced private network, and the CPU 3 may identify, from the acquired surrounding image, buildings, mountains, other vehicles, pedestrians, lanes, headlights, street trees, and the like located within a certain distance from the vehicle 100.

The CPU 3 according to one or more embodiments shown in FIG. 9 may control at least some of operations and functions of the vehicle communication system 1. The CPU 3 may be connected to a non-permanent storage device 5 and a permanent storage device 7. For example, the non-permanent storage device 5 may be RAM and the permanent storage device 7 may be a hard disk drive (HDD) or flash memory.

The CPU 3 may receive a user input allowing a user to interact with the CPU 3. For example, the vehicle communication system 1 may include at least one of the microphone 29, an auxiliary input interface 25, the input interface 52, a universal serial bus (USB) input interface 23, a GPS position input interface 24, and a Bluetooth transceiver 15. In addition, the vehicle communication system 1 may include an input selector 51 configured to select an input scheme such that the vehicle communication system 1 receives various inputs from the user. Analog inputs received from the microphone 29 and the auxiliary input interface 25 may be converted into digital signals by an analog-digital converter 27 before transmitted to the CPU 3. In addition, a plurality of vehicle components and auxiliary components may communicate with the vehicle communication system 1 through the reduced private network. For example, the vehicle communication system 1 may compute, by using the CPU 3, application data of the terminal 200 (see FIG. 1) connected to the TCU 34 through the reduced private network.

In addition, the vehicle communication system 1 may include a display 4, a speaker 13, and the like as output interfaces. The speaker 13 may be connected to an amplifier 11 and receive an audio output signal from the CPU 3 through a digital-analog converter 9. In addition, an output of the vehicle communication system 1 may be output through an external device, such as a user navigation device 54 or a navigation device 60 embedded in the vehicle 100, connected through USB or Bluetooth. For example, the vehicle communication system 1 may perform at least one function of the terminal 200 connected to the TCU 34 through the reduced private network, by using the display 4, the speaker 13, and the like.

The vehicle communication system 1 may include the display 4. The display 4 may display information processed by the vehicle communication system 1. When the display 4 and a touchpad form a mutual layer structure and are thus implemented as a touch screen, the display 4 may also be used as an input device in addition to an output device. For example, the display 4 may include a transparent display or a head-up display. For example, the user may select a terminal or a device to be connected to the TCU 34 through the reduced private network, based on pre-registered device information.

The vehicle communication system 1 may receive data from an IoT device and a user mobile device 53 through the reduced private network and receive data from at least one of a base station 57 and a server through an LTE/NR cellular network.

According to one or more embodiments, the vehicle communication system 1 may communicate with the user mobile device 53 (e.g., the terminal 200, a cellular phone, a smartphone, or a personal digital assistant (PDA)), other device supporting a wireless remote network access, and an IoT device by using the Bluetooth transceiver 15. The user mobile device 53 may be, for example, a device carried by a passenger boarding on the vehicle 100. The user mobile device 53 may communicate with a network 61 outside the vehicle 100 through communication with the base station 57. For example, the base station 57 may be a base station supporting cellular communication or a WiFi AP.

Pairing of the Bluetooth transceiver 15 of the vehicle communication system 1 and the user mobile device 53 may be indicated by a user input received through the input interface 52, such as a button. Therefore, the CPU 3 may receive an indication that the Bluetooth transceiver 15 pairs with a Bluetooth transceiver of the user mobile device 53 (or an IoT device).

The CPU 3 may communicate with the network 61 through the user mobile device 53 or directly communicate with the network 61 by using an embedded modem 63 (e.g., the first modem 114 and the second modem 115 of FIGS. 2 to 6) having an antenna 18. For example, the embedded modem 63 may be a USB cellular modem supporting cellular communication.

The CPU 3 according to one or more embodiments may provide an operating system including an application programming interface (API) for communication with modem application software. The modem application software may complete wireless communication with a Bluetooth transceiver mounted in an external device, such as the user mobile device 53, by accessing an embedded module or firmware in the Bluetooth transceiver 15. Besides Bluetooth or WiFi, free space optical communication (e.g., infrared data association (IrDA)) may be used for in-vehicle wireless communication.

As an additional source which may interact with the vehicle 100, the vehicle communication system 1 may include, for example, the user navigation device 54 having a USB connection 56 and/or an antenna 58, the navigation device 60 having a USB connection 62 or another connection, the GPS position input interface 24 including an onboard GPS, or a remote navigation system having connectivity to the network 61. For example, the vehicle 100 and the terminal 200 or the vehicle 100 and an IoT device may communicate with each other based on the USB connection 56.

In addition, the CPU 3 may communicate with various other auxiliary devices 65. The auxiliary devices 65 may access the CPU 3 through a wireless connection 67 or a wired (e.g., USB) connection 69. In some embodiments, the auxiliary devices 65 may include a personal media player, a wireless healthcare device, a portable computer, and the like.

In addition, the CPU 3 may be connected to the vehicle 100 based on, for example, a wireless router 73 using a WiFi transceiver 71. In this case, the CPU 3 may be connected to a remote network within the coverage of the wireless router (e.g., a local router) 73.

An apparatus and a method according to one or more embodiments may construct a reduced private network by using a modem (e.g., a Red-eNB modem) with a reduced function according to the characteristics of a network in the vehicle 100 and expect a technical effect of minimizing a control overhead for data transmission and reception between devices in the vehicle 100 through the reduced private network.

While the disclosure has been particularly shown and described with reference to embodiments thereof, various changes in form and details may be made therein without departing from the scope of the following claims.

## Claims

1. An electronic device (110) comprising:
a memory (116) storing pre-connection information;
a first modem (114);
a second modem (115); and
a processor (113) operatively connected to the memory (116), the first modem (114), and the second modem (115),
wherein the processor (113) is configured to:
establish a first wireless communication connection with a base station (300), using the first modem (114) (S100), and
establish a second wireless communication connection with a terminal (200) in a vehicle (100), using the second modem (115), based on at least one piece of the pre-connection information (S110), and
wherein the pre-connection information comprises at least one of access frequency band information, system information, radio resource control initial configuration value information, and registered device identification information, and
skip at least one procedure among an initial access procedure, a random access procedure, a channel state-related measurement/reporting procedure, a carrier aggregation procedure, or a handover-related measurement/reporting procedure, and
wherein the at least one procedure is performed between the electronic device (110) and the terminal (200).

2. The electronic device (110) of claim 1, wherein the second modem (115) comprises at least one of a hardware component and a software component, which are included in the first modem (114),
wherein the access frequency band information comprises at least one of center frequency information, bandwidth information, and bandwidth-part information, and
wherein the system information comprises at least one of management information base information or system information block information.

3. The electronic device (110) of claim 1 or claim 2, wherein the processor (113) is further configured to:
in a first case that an acknowledge message (ACK) is received from the terminal (200) through the second wireless communication connection, increase a modulation and coding scheme (MCS) level for data to be transmitted to the terminal (200), and
in a second case that a negative acknowledge message (NACK) is received from the terminal (200) through the second wireless communication connection, decrease the modulation and coding scheme level for the data to be transmitted to the terminal (200).

4. The electronic device (110) of any preceding claim, wherein the processor (113) is further configured to perform a discontinuous reception operation, based on a data transmission amount, through the second wireless communication connection, and
wherein the processor (113) is further configured to, in a case that another terminal establishes a wireless communication connection with the electronic device (110), transmit data to the terminal (200) and the another terminal, based on a time division multiplexing scheme, using the second modem (115).

5. The electronic device (110) of any preceding claim, wherein the processor (113) is further configured to:
establish a third wireless communication connection with an external device, based on at least one piece of the pre-connection information, using the second modem (115),
receive device information from the external device through the third wireless communication connection, and
transmit the device information to an advanced driver assistance system (180) or in-vehicle infotainment (185) of the vehicle (100),
wherein the external device comprises an Internet of Things (IoT) device comprising a modem having at least one function among functions of an existing telematics control unit (111) or user equipment modem, and
wherein the functions correspond to characteristics of the third wireless communication connection.

6. The electronic device (110) of any preceding claim, wherein the processor (113) is further configured to:
receive universal subscriber identity module data of the terminal (200), from the terminal (200), based on the second wireless communication connection,
establish a fourth wireless communication connection with an external base station, using the universal subscriber identity module data of the terminal (200),
disconnect the first wireless communication connection based on establishing the fourth wireless communication connection, and
transmit, to a target component of the vehicle (100), a control signal for performing at least one function of the terminal in the target component, based on the fourth wireless communication connection.

7. The electronic device (110) of any preceding claim, wherein the processor (113) is further configured to:
receive application data, from the terminal (200), based on the second wireless communication connection,
generate result data by performing computation processing on the application data and by controlling a computation component of the vehicle (100), and
transmit the result data to the terminal (200) based on the second wireless communication connection.

8. An operating method of an electronic device (110), the operating method comprising:
establishing a first wireless communication connection with a base station (300) using a first modem (114); and
establishing a second wireless communication connection with a terminal (200) in a vehicle (100), based on at least one piece of pre-connection information, using a second modem (115),
wherein the pre-connection information comprises, as information pre-stored in the electronic device (110), at least one of access frequency band information, system information, radio resource control initial configuration value information, and registered device identification information, and
skipping at least one procedure of an initial access procedure, a random access procedure, a channel state-related measurement/reporting procedure, a carrier aggregation procedure, or a handover-related measurement/reporting procedure,
wherein the at least one procedure is performed between the electronic device (110) and the terminal (200).

9. The operating method of claim 8, further comprising:
in a first case that an acknowledge message (ACK) is received from the terminal (200) through the second wireless communication connection, increasing a modulation and coding scheme (MCS) level for data to be transmitted to the terminal (200);
in a second case that a negative acknowledge message (NACK) is received from the terminal (200) through the second wireless communication connection, decreasing the modulation and coding scheme (MCS) level for the data to be transmitted to the terminal (200);
performing a discontinuous reception operation, based on a data transmission amount, through the second wireless communication connection; and
in a case that another terminal establishes a wireless communication connection with the electronic device (110), transmitting data to the terminal (200) and the another terminal, based on a time division multiplexing scheme.

10. The operating method of claim 8, further comprising:
establishing a third wireless communication connection with an external device, based on at least one piece of the pre-connection information;
receiving device information of the external device from the external device, through the third wireless communication connection; and
transmitting the device information to an advanced driver assistance system (180) or in-vehicle infotainment (185) of the vehicle (100), and
wherein the external device comprises an Internet of Things (IoT) device comprising a modem having at least one function from among functions of an existing telematics control unit (111) or user equipment modem, and
wherein the functions correspond to characteristics of the third wireless communication connection.

11. The operating method of claim 8, further comprising:
receiving universal subscriber identity module data of the terminal (200) from the terminal (200), through the second wireless communication connection;
establishing a fourth wireless communication connection with an external base station (300), using the USIM data of the terminal (200);
disconnecting the first wireless communication connection, based on establishing the fourth wireless communication connection; and
transmitting, to a target component of the vehicle (100), a control signal for performing at least one function of the terminal (200) in the target component, through the fourth wireless communication connection.

12. The operating method of claim 8, further comprising:
receiving application data from the terminal (200), through the second wireless communication connection;
generating result data by performing computation processing on the application data and by controlling a computation component of the vehicle (100); and
transmitting the result data to the terminal (200), through the second wireless communication connection.

13. A vehicle (100) system comprising:
an electronic device (110) according to any of claims 1 to 7; and
an Internet of Things (IoT) module,
wherein the electronic device (110) comprises:
an antenna module (112);
a telematics control unit (111) comprising a first modem (114) configured to support a first wireless communication connection and a second modem (115) configured to support a second wireless communication connection,
wherein the second modem (115) is configured to support a third wireless communication connection between the vehicle system and the Internet of Things (IoT) module,
wherein the telematics control unit (111) is configured to:
establish the third wireless communication connection with the Internet of Things (IoT) module, based on the pre-connection information and
control data transmission and reception between the telematics control unit (111) and the Internet of Things (IoT) module, based on the established third wireless communication connection, and
wherein the second modem (115) comprises at least one of a hardware component or a software component, which is included in the first modem (114).

## Patentansprüche

1. Elektronische Vorrichtung (110), umfassend:
einen Speicher (116), der Vorverbindungsinformationen speichert;
ein erstes Modem (114);
ein zweites Modem (115); und
einen Prozessor (113), der operativ mit dem Speicher (116), dem ersten Modem (114) und dem zweiten Modem (115) verbunden ist,
wobei der Prozessor (113) konfiguriert zum:
Etablieren einer ersten drahtlosen Kommunikationsverbindung mit einer Basisstation (300) unter Verwendung des ersten Modems (114) (S100) und
Etablieren einer zweiten drahtlosen Kommunikationsverbindung mit einem Endgerät (200) in einem Fahrzeug (100) unter Verwendung des zweiten Modems (115) auf der Grundlage mindestens eines Teils der Vorverbindungsinformationen (S110), und
wobei die Vorverbindungsinformationen mindestens eines umfassen von Zugriffsfrequenzbandinformationen, Systeminformationen, Informationen zum anfänglichen Konfigurationswert der Funkressourcensteuerung und Informationen zur Identifizierung einer registrierten Vorrichtung, und
Überspringen mindestens einer Prozedur unter einer Initialzugriffsprozedur, einer Zufallszugriffsprozedur, einer kanalzustandsbezogenen Mess-/Berichtprozedur, einer Trägerbündelungsprozedur oder einer übergabebezogenen Mess-/Berichtprozedur, und
wobei die mindestens eine Prozedur zwischen der elektronischen Vorrichtung (110) und dem Endgerät (200) durchgeführt wird.

2. Elektronische Vorrichtung (110) nach Anspruch 1, wobei das zweite Modem (115) mindestens eines von einer Hardwarekomponente und einer Softwarekomponente umfasst, die in dem ersten Modem (114) eingeschlossen sind,
wobei die Zugriffsfrequenzbandinformationen mindestens eines umfassen von: Mittenfrequenzinformationen, Bandbreiteninformationen und Bandbreitenanteilinformationen, und
wobei die Systeminformationen mindestens eines umfassen von Informationen der Managementinformationsbasis oder Informationen des Systeminformationsblocks.

3. Elektronische Vorrichtung (110) nach Anspruch 1 oder Anspruch 2, wobei der Prozessor (113) weiter konfiguriert ist zum:
in einem ersten Fall, in dem eine Bestätigungsnachricht (ACK) von dem Endgerät (200) über die zweite drahtlose Kommunikationsverbindung empfangen wird, Erhöhen einer Modulations- und Codierungsschema-, (MCS)-, Stufe für die an das Endgerät (200) zu übertragenden Daten, und
in einem zweiten Fall, in dem eine negative Bestätigungsnachricht (NACK) von dem Endgerät (200) über die zweite drahtlose Kommunikationsverbindung empfangen wird, Verringern der Modulations- und Codierungsschema-Stufe für die an das Endgerät (200) zu übertragenden Daten.

4. Elektronische Vorrichtung (110) nach einem vorstehenden Anspruch, wobei der Prozessor (113) weiter konfiguriert ist, um auf der Grundlage einer Datenübertragungsmenge über die zweite drahtlose Kommunikationsverbindung einen diskontinuierlichen Empfangsvorgang durchzuführen, und
wobei der Prozessor (113) weiter konfiguriert ist, um in einem Fall, in dem ein anderes Endgerät eine drahtlose Kommunikationsverbindung mit der elektronischen Vorrichtung (110) etabliert, auf der Grundlage eines Zeitmultiplexschemas unter Verwendung des zweiten Modems (115) Daten an das Endgerät (200) und das andere Endgerät zu übertragen.

5. Elektronische Vorrichtung (110) nach einem vorstehenden Anspruch, wobei der Prozessor (113) weiter konfiguriert ist zum:
Etablieren einer dritten drahtlosen Kommunikationsverbindung mit einer externen Vorrichtung auf der Grundlage mindestens eines Teils der Vorverbindungsinformationen unter Verwendung des zweiten Modems (115),
Empfangen von Vorrichtungsinformationen von der externen Vorrichtung über die dritte drahtlose Kommunikationsverbindung und
Übertragen der Vorrichtungsinformationen an ein fortschrittliches Fahrerassistenzsystem (180) oder fahrzeuginternes Infotainment (185) des Fahrzeugs (100),
wobei die externe Vorrichtung eine Internet-der-Dinge-, (IoT)-, Vorrichtung umfasst, die ein Modem mit mindestens einer Funktion unter Funktionen einer bestehenden Telematik-Steuereinheit (111) oder eines Benutzerausrüstungsmodems umfasst, und
wobei die Funktionen Charakteristiken der dritten drahtlosen Kommunikationsverbindung entsprechen.

6. Elektronische Vorrichtung (110) nach einem vorstehenden Anspruch, wobei der Prozessor (113) weiter konfiguriert ist zum:
Empfangen von universellen Teilnehmeridentitätsmoduldaten des Endgeräts (200) von dem Endgerät (200) auf der Grundlage der zweiten drahtlosen Kommunikationsverbindung,
Etablieren einer vierten drahtlosen Kommunikationsverbindung mit einer externen Basisstation unter Verwendung der universellen Teilnehmeridentitätsmoduldaten des Endgeräts (200),
Trennen der ersten drahtlosen Kommunikationsverbindung auf der Grundlage des Etablierens der vierten drahtlosen Kommunikationsverbindung und
Übertragen eines Steuersignals zum Durchführen mindestens einer Funktion des Endgeräts in der Zielkomponente an eine Zielkomponente des Fahrzeugs (100) auf der Grundlage der vierten drahtlosen Kommunikationsverbindung.

7. Elektronische Vorrichtung (110) nach einem vorstehenden Anspruch, wobei der Prozessor (113) weiter konfiguriert ist zum:
Empfangen von Anwendungsdaten von dem Endgerät (200) auf der Grundlage der zweiten drahtlosen Kommunikationsverbindung,
Erzeugen von Ergebnisdaten durch Durchführen von Berechnungsverarbeitung an den Anwendungsdaten und durch Steuern einer Berechnungskomponente des Fahrzeugs (100) und
Übertragen der Ergebnisdaten auf der Grundlage der zweiten drahtlosen Kommunikationsverbindung an das Endgerät (200).

8. Betriebsverfahren einer elektronischen Vorrichtung (110), wobei das Betriebsverfahren Folgendes umfasst:
Etablieren einer ersten drahtlosen Kommunikationsverbindung mit einer Basisstation (300) unter Verwendung eines ersten Modems (114); und
Etablieren einer zweiten drahtlosen Kommunikationsverbindung mit einem Endgerät (200) in einem Fahrzeug (100) auf der Grundlage mindestens eines Teils von Vorverbindungsinformationen unter Verwendung eines zweiten Modems (115),
wobei die Vorverbindungsinformationen als in der elektronischen Vorrichtung (110) vorab gespeicherte Informationen mindestens eines umfassen von Zugriffsfrequenzbandinformationen, Systeminformationen, Informationen zum anfänglichen Konfigurationswert der Funkressourcensteuerung und Informationen zur Identifikation einer registrierten Vorrichtung, und
Überspringen mindestens einer Prozedur von einer Initialzugriffsprozedur, einer Zufallszugriffsprozedur, einer kanalzustandsbezogenen Mess-/Berichtprozedur, einer Trägerbündelungsprozedur oder einer übergabebezogenen Mess-/Berichtprozedur,
wobei die mindestens eine Prozedur zwischen der elektronischen Vorrichtung (110) und dem Endgerät (200) durchgeführt wird.

9. Betriebsverfahren nach Anspruch 8, weiter umfassend:
in einem ersten Fall, in dem eine Bestätigungsnachricht (ACK) von dem Endgerät (200) über die zweite drahtlose Kommunikationsverbindung empfangen wird, Erhöhen einer Modulations- und Codierungsschema-, MCS-, Stufe für die an das Endgerät (200) zu übertragenden Daten;
in einem zweiten Fall, in dem eine negative Bestätigungsnachricht (NACK) von dem Endgerät (200) über die zweite drahtlose Kommunikationsverbindung empfangen wird, Verringern der Modulations- und Codierungsschema-Stufe (MCS-Stufe) für die an das Endgerät (200) zu übertragenden Daten;
Durchführen eines diskontinuierlichen Empfangsvorgangs auf der Grundlage einer Datenübertragungsmenge über die zweite drahtlose Kommunikationsverbindung; und
in dem Fall, dass ein anderes Endgerät eine drahtlose Kommunikationsverbindung mit der elektronischen Vorrichtung (110) etabliert, Übertragen von Daten an das Endgerät (200) und das andere Endgerät auf der Grundlage eines Zeitmultiplexschemas.

10. Betriebsverfahren nach Anspruch 8, weiter umfassend:
Etablieren einer dritten drahtlosen Kommunikationsverbindung mit einer externen Vorrichtung auf der Grundlage mindestens eines Teils der Vorverbindungsinformationen;
Empfangen von Vorrichtungsinformationen zu der externen Vorrichtung von der externen Vorrichtung über die dritte drahtlose Kommunikationsverbindung; und
Übertragen der Vorrichtungsinformationen an ein fortschrittliches Fahrerassistenzsystem (180) oder fahrzeuginternes Infotainment (185) des Fahrzeugs (100), und
wobei die externe Vorrichtung eine Internet-der-Dinge-, (IoT)-, Vorrichtung umfasst, die ein Modem mit mindestens einer Funktion von unter Funktionen einer bestehenden Telematik-Steuereinheit (111) oder eines Benutzerausrüstungsmodems umfasst, und
wobei die Funktionen Charakteristiken der dritten drahtlosen Kommunikationsverbindung entsprechen.

11. Betriebsverfahren nach Anspruch 8, weiter umfassend:
Empfangen von universellen Teilnehmeridentitätsmoduldaten des Endgeräts (200) von dem Endgerät (200) über die zweite drahtlose Kommunikationsverbindung;
Etablieren einer vierten drahtlosen Kommunikationsverbindung mit einer externen Basisstation (300) unter Verwendung der USIM-Daten des Endgeräts (200);
Trennen der ersten drahtlosen Kommunikationsverbindung auf der Grundlage des Etablierens der vierten drahtlosen Kommunikationsverbindung; und
Übertragen eines Steuersignals zum Durchführen mindestens einer Funktion des Endgeräts (200) in der Zielkomponente an eine Zielkomponente des Fahrzeugs (100) über die vierte drahtlose Kommunikationsverbindung.

12. Betriebsverfahren nach Anspruch 8, weiter umfassend:
Empfangen von Anwendungsdaten von dem Endgerät (200) durch die zweite drahtlose Kommunikationsverbindung;
Erzeugen von Ergebnisdaten durch Durchführen von Berechnungsverarbeitung an den Anwendungsdaten und durch Steuern einer Berechnungskomponente des Fahrzeugs (100); und
Übertragen der Ergebnisdaten durch die zweite drahtlose Kommunikationsverbindung an das Endgerät (200).

13. Fahrzeugsystem (100), umfassend:
eine elektronische Vorrichtung (110) nach einem der Ansprüche 1 bis 7; und
ein Internet-der-Dinge-, (IoT-), Modul,
wobei die elektronische Vorrichtung (110) Folgendes umfasst:
ein Antennenmodul (112);
eine Telematik-Steuereinheit (111), die ein erstes Modem (114), konfiguriert zur Unterstützung einer ersten drahtlosen Kommunikationsverbindung, und ein zweites Modem (115), konfiguriert zur Unterstützung einer zweiten drahtlosen Kommunikationsverbindung, umfasst,
wobei das zweite Modem (115) konfiguriert ist, um eine dritte drahtlose Kommunikationsverbindung zwischen dem Fahrzeugsystem und dem Internet-der-Dinge-, (IoT-), Modul zu unterstützen, wobei die Telematik-Steuereinheit (111) konfiguriert ist zum:
Etablieren der dritten drahtlosen Kommunikationsverbindung mit dem Internet-der-Dinge-, (IoT-), Modul, auf der Grundlage der Vorverbindungsinformationen und
Steuern von Datenübertragung und -empfang zwischen der Telematik-Steuereinheit (111) und dem Internet-der-Dinge-, (IoT-), Modul, auf der Grundlage der etablierten dritten drahtlosen Kommunikationsverbindung, und
wobei das zweite Modem (115) mindestens eines von einer Hardwarekomponente oder einer Softwarekomponente umfasst, die im dem ersten Modem (114) eingeschlossen ist.

## Revendications

1. Dispositif électronique (110) comprenant :
une mémoire (116) stockant des informations de pré-connexion ;
un premier modem (114) ;
un deuxième modem (115) ; et
un processeur (113) connecté fonctionnellement à la mémoire (116), au premier modem (114) et au deuxième modem (115),
dans lequel le processeur (113) est configuré pour :
établir une première connexion de communication sans fil avec une station de base (300), en utilisant le premier modem (114) (S100), et
établir une deuxième connexion de communication sans fil avec un terminal (200) dans un véhicule (100), en utilisant le deuxième modem (115), sur la base d'au moins une information de pré-connexion (S110), et
dans lequel les informations de préconnexion comprennent au moins une information parmi des informations sur la bande de fréquence d'accès, des informations système, des informations sur la valeur de configuration initiale du contrôle des ressources radio et des information d'identification du dispositif enregistré, et
omettre au moins une procédure parmi une procédure d'accès initial, une procédure d'accès aléatoire, une procédure de mesure/reporting liée à l'état du canal, une procédure d'agrégation de porteuses ou une procédure de mesure/reporting liée au transfert, et
dans lequel au moins une procédure est effectuée entre le dispositif électronique (110) et le terminal (200).

2. Dispositif électronique (110) selon la revendication 1, dans lequel le deuxième modem (115) comprend au moins l'un parmi un composant matériel et un composant logiciel, qui sont inclus dans le premier modem (114),
dans lequel les informations relatives à la bande de fréquence d'accès comprennent au moins une information parmi des informations de fréquence centrale, des informations de bande passante et des informations relatives à une partie de bande passante, et
dans lequel les informations système comprennent au moins une information parmi des informations de base de données de gestion ou des informations de bloc de données système.

3. Dispositif électronique (110) selon la revendication 1 ou la revendication 2, dans lequel le processeur (113) est en outre configuré pour :
dans le premier cas dans lequel un message d'accusé de réception (ACK) est reçu du terminal (200) via la deuxième connexion de communication sans fil, augmenter le niveau de modulation et de codage (MCS) des données à transmettre au terminal (200), et
dans un deuxième cas dans lequel un message d'accusé de réception négatif (NACK) est reçu du terminal (200) via la deuxième connexion de communication sans fil, diminuer le niveau du schéma de modulation et de codage des données à transmettre au terminal (200).

4. Dispositif électronique (110) selon une quelconque revendication précédente, dans lequel le processeur (113) est en outre configuré pour effectuer une opération de réception discontinue, basée sur une quantité de données transmises, via la deuxième connexion de communication sans fil, et
dans lequel le processeur (113) est en outre configuré pour, dans le cas dans lequel un autre terminal établit une connexion de communication sans fil avec le dispositif électronique (110), transmettre des données au terminal (200) et à l'autre terminal, sur la base d'un schéma de multiplexage temporel, en utilisant le deuxième modem (115).

5. Dispositif électronique (110) selon une quelconque revendication précédente, dans lequel le processeur (113) est en outre configuré pour :
établir une troisième connexion de communication sans fil avec un dispositif externe, sur la base d'au moins une information de pré-connexion, en utilisant le deuxième modem (115),
recevoir des informations sur le dispositif externe via la troisième connexion de communication sans fil, et
transmettre les informations sur le dispositif à un système avancé d'aide à la conduite (180) ou à un système d'infodivertissement embarqué (185) du véhicule (100),
dans lequel le dispositif externe comprend un dispositif de l'Internet des objets (loT) comprenant un modem présentant au moins une fonction parmi des fonctions d'une unité de commande télématique existante (111) ou d'un modem d'équipement utilisateur, et
dans lequel les fonctions correspondent aux caractéristiques de la troisième connexion de communication sans fil.

6. Dispositif électronique (110) selon une quelconque revendication précédente, dans lequel le processeur (113) est en outre configuré pour :
recevoir des données du module d'identité universel de l'abonné du terminal (200), à partir du terminal (200), sur la base de la deuxième connexion de communication sans fil,
établir une quatrième connexion de communication sans fil avec une station de base externe, en utilisant les données du module d'identité universel de l'abonné du terminal (200),
déconnecter la première connexion de communication sans fil après avoir établi la quatrième connexion de communication sans fil, et
transmettre, à un composant cible du véhicule (100), un signal de commande pour effectuer au moins une fonction du terminal dans le composant cible, sur la base de la quatrième connexion de communication sans fil.

7. Dispositif électronique (110) selon une quelconque revendication précédente, dans lequel le processeur (113) est en outre configuré pour :
recevoir des données d'application, à partir du terminal (200), sur la base de la deuxième connexion de communication sans fil,
générer des données de résultats en effectuant un traitement de calcul sur les données d'application et en contrôlant un composant de calcul du véhicule (100), et
transmettre les données de résultat au terminal (200) sur la base de la deuxième connexion de communication sans fil.

8. Procédé de fonctionnement d'un dispositif électronique (110), le procédé de fonctionnement comprenant :
l'établissement d'une première connexion de communication sans fil avec une station de base (300) en utilisant un premier modem (114) ; et
l'établissement d'une deuxième connexion de communication sans fil avec un terminal (200) dans un véhicule (100), sur la base d'au moins une information de pré-connexion, en utilisant un deuxième modem (115),
dans lequel les informations de préconnexion comprennent, en tant qu'informations pré-stockées dans le dispositif électronique (110), au moins une information parmi des informations sur la bande de fréquence d'accès, des informations système, des informations sur la valeur de configuration initiale du contrôle des ressources radio et des information d'identification du dispositif enregistré, et
l'omission d'au moins une procédure d'accès initial, une procédure d'accès aléatoire ou une procédure de mesure/reporting liée à l'état du canal, une procédure d'agrégation de porteuses ou une procédure de mesure/reporting liée au transfert,
dans lequel au moins une procédure est effectuée entre le dispositif électronique (110) et le terminal (200).

9. Procédé de fonctionnement selon la revendication 8, comprenant en outre :
dans un premier cas dans lequel un message d'accusé de réception (ACK) est reçu du terminal (200) via la deuxième connexion de communication sans fil, l'augmentation d'un niveau de modulation et de codage (MCS) pour les données à transmettre au terminal (200) ;
dans un deuxième cas où un message d'accusé de réception négatif (NACK) est reçu du terminal (200) via la deuxième connexion de communication sans fil, la diminution du niveau de modulation et de codage (MCS) pour les données à transmettre au terminal (200) ;
la réalisation d'une opération de réception discontinue, basée sur une quantité de données transmises, via la deuxième connexion de communication sans fil ; et
dans le cas dans lequel un autre terminal établit une connexion de communication sans fil avec le dispositif électronique (110), la transmission de données au terminal (200) et à l'autre terminal, sur la base d'un schéma de multiplexage temporel.

10. Procédé de fonctionnement selon la revendication 8, comprenant en outre :
établir une troisième connexion de communication sans fil avec un dispositif externe, sur la base d'au moins une information de pré-connexion ;
recevoir des informations sur le dispositif externe à partir du dispositif externe, via la troisième connexion de communication sans fil ; et
transmettre les informations sur le dispositif à un système avancé d'aide à la conduite (180) ou à un système d'infodivertissement embarqué (185) du véhicule (100), et
dans lequel le dispositif externe comprend un dispositif de l'Internet des objets (loT) comprenant un modem présentant au moins une fonction parmi des fonctions d'une unité de commande télématique existante (111) ou d'un modem d'équipement utilisateur, et
dans lequel les fonctions correspondent aux caractéristiques de la troisième connexion de communication sans fil.

11. Procédé de fonctionnement selon la revendication 8, comprenant en outre :
la réception de données du module d'identité universel de l'abonné du terminal (200) à partir du terminal (200), via la deuxième connexion de communication sans fil ;
l'établissement d'une quatrième connexion de communication sans fil avec une station de base externe (300), en utilisant les données USIM du terminal (200) ;
la déconnexion de la première connexion de communication sans fil, suite à l'établissement de la quatrième connexion de communication sans fil ; et
la transmission, à un composant cible du véhicule (100), d'un signal de commande pour effectuer au moins une fonction du terminal (200) dans le composant cible, via la quatrième connexion de communication sans fil.

12. Procédé de fonctionnement selon la revendication 8, comprenant en outre :
la réception de données d'application à partir du terminal (200), via la deuxième connexion de communication sans fil ;
la génération de données de résultats en effectuant un traitement de calcul sur les données d'application et en contrôlant un composant de calcul du véhicule (100) ; et
la transmission des données de résultat au terminal (200), via la deuxième connexion de communication sans fil.

13. Système de véhicule (100) comprenant :
un dispositif électronique (110) selon l'une quelconque des revendications 1 à 7 ; et
un module Internet des objets (loT),
dans lequel le dispositif électronique (110) comprend :
un module d'antenne (112) ;
une unité de commande télématique (111) comprenant un premier modem (114) configuré pour prendre en charge une première connexion de communication sans fil et un deuxième modem (115) configuré pour prendre en charge une deuxième connexion de communication sans fil,
dans lequel le deuxième modem (115) est configuré pour prendre en charge une troisième connexion de communication sans fil entre le système du véhicule et le module Internet des objets (loT), dans lequel l'unité de commande télématique (111) est configurée pour :
établir la troisième connexion de communication sans fil avec le module Internet des objets (loT), sur la base des informations de pré-connexion et
commander la transmission et la réception des données entre l'unité de commande télématique (111) et le module Internet des objets (loT), sur la base de la troisième connexion de communication sans fil établie, et
dans lequel le deuxième modem (115) comprend au moins l'un parmi un composant matériel ou un composant logiciel, qui est inclus dans le premier modem (114).
